# EUROPEAN PATENT APPLICATION

(11) **EP 4 641 175 A2**
(43) Date of publication of application: **29.10.2025**
(21) Application number: 25200875.0
(22) Date of filing: 01.09.2022
(51) Int. Cl.: G01N 21/84

(54) **SYSTEMS AND METHODS FOR MEASURING CHLOROPHYLL FLUORESCENCE**

(30) Priority: 01.09.2021 EP 21194432
(62) Divisional of application: 22789281.7
(71) Applicant: Gardin Ltd, Abingdon, Oxfordshire OX14 4RY (GB)
(72) Inventor: MOVSHOVICH, Konstantin, Didcot, OX11 7ST (GB); OSTERLOH, Richard, Pitstone, LU7 9GE (GB); TICCHIARELLI, Fabrizio, Winchester, SO23 0HY (GB); TALUKDAR, Sumanta, Chippenham, SN15 3GA (GB)
(74) Representative: Gill Jennings & Every LLP

(57) **Abstract**

There is provided a system for measuring chlorophyll fluorescence. The system comprises at least one light source configured to emit substantially collimated or convergently focussed light so as to irradiate an area with light; an actuator configured to controllably direct the light from the light source so as to enable the light source to irradiate a plurality of different areas with light; and an optical sensor configured to detect chlorophyll fluorescence from each area irradiated with light.

## Description

### Field of the Invention

The invention relates to systems and methods for measuring chlorophyll fluorescence. In particular the invention relates to an installation suitable for use in commercial greenhouses, vertical farms, or outdoor farms for measuring the chlorophyll fluorescence of plants located across a target area using optical analysis.

### Background to the Invention

In plant growth, chlorophyll fluorescence is the phenomenon by which absorbed light is re-emitted by chlorophyll molecules in the plant during de-excitation. Light absorbed by a plant can generally contribute to electron transport, heat, or fluorescence, and the ratio of these can vary based on environmental factors and factors associated with the plant physiology. Measuring chlorophyll fluorescence can be used as an indicator for several aspects of plant growth, including rates of CO₂ assimilation by the plant via photosynthesis (electron transport through the photosystem), perception of biotic or abiotic stress, and the impact environmental changes (e.g. temperature, humidity, irrigation, carbon dioxide concentration) are having on the growth efficiency of the plant. As such, chlorophyll fluorescence is a useful technique for evaluating the yield, nutrition, and quality of agricultural crops.

Chlorophyll fluorescence is usually assessed by firstly exposing a dark-adapted plant to a short high intensity flash of light in order to saturate the photochemical processes in the plant, which allows the fluorescence levels to reach their maximum. The fluorescence then returns to its minimum levels in the dark adapted state. Subsequently, an actinic light is applied, and saturation pulses applied again. Fluorescence rises to a new light-adapted maximum in response to the pulses, before falling to a light-adapted minimum. The ratio of these fluorescence levels provides various indications of the state of the plant, including its efficiency, i.e. the proportion of incident light that is contributing to useful electron transport.

A description of the theory behind chlorophyll fluorescence analysis can be found in "Chlorophyll fluorescence analysis: a guide to good practice and understanding some new applications.", by E. Murchie and T. Lawson, Journal of experimental botany, 64 13 (2013): 3983-98, DOI:10.1093/jxb/ert208.

In commercial plant growth, it is known to bathe a plant bed in light and optically monitor the plants for fluorescence. Close-proximity measurement techniques are also known, by which the pulses of light and the subsequent fluorescence are carried through an optical fiber clamped or held close to a region of interest. Both of these techniques suffer from problems which it would be desirable to overcome. In particular, the former techniques are very energy demanding, owing to the need for regular bright pulses of light, and also generally have relatively low sensitivity to fluorescence. On the other hand, the close-proximity techniques typically require manual operation and can damage the plant being measured. The present invention aims to provide a system for performing chlorophyll fluorescence analysis in a commercial setting that does not suffer from the above-noted drawbacks associated with known chlorophyll measuring systems.

### Summary of the Invention

In accordance with a first aspect of the present invention, there is provided a system for measuring chlorophyll fluorescence, the system comprising: at least one light source configured to emit substantially collimated or convergently focussed light so as to irradiate an area with light; an actuator configured to controllably direct the light from the light source so as to enable the light source to irradiate a plurality of different areas with light; and an optical sensor configured to detect chlorophyll fluorescence from each area irradiated with light.

This system uses an actuated light source that emits substantially collimated or convergently focussed light in order to irradiate small areas of a canopy of a plant crop. The system will typically be mounted over a crop and will irradiate down onto the canopy in small areas corresponding to measurement target position. Irradiating small areas of a canopy at a time allows the light intensity threshold for saturation and measurement pulses to be reached at much lower overall energy cost than systems which bathe the canopy in light pulses. Actuating this directed light source enables regions of interest to be measured across a wider area of the crop canopy, ensuring a large-scale picture of crop growth can still be produced. Additionally, actuating the light source to illuminate target areas off the vertical axis, i.e. with some horizontal component, can allow you to make equally accurate measurements of targets under the canopy. This targeted measurement system can be implemented without physical contact with the plant, and without the need for a manual operator and so offers significant advantages over known systems for measuring plant fluorescence.

It will be appreciated that the system does not require precise collimation of the light source, and indeed commercially available lasers have some degree of beam divergence. The term "substantially collimated" will be understood to encompass a light source with a beam divergence of 10° or less. More tightly collimated light will, of course, be preferred, and indeed, it will be preferred to have a beam divergence of 5° or less, more preferably 2° or less, even more preferably 1° or less, most preferably 0.1° or less. Commercially available lasers will typically have a beam divergence of much less than 0.1°, but as will be explained further below, the present system can be implemented with light sources that have much more loosely collimated light.

As noted above, the system includes an actuator configured to controllably direct the light from the light source so as to enable the light source to irradiate a plurality of different areas with light. This may typically involve an actuator that is configured to move the light source so as to direct the light from the light source. That is, by moving the whole light source, it is possible to change the area irradiated with light from that light source. Alternatively, or additionally, the actuator may be configured to move one or more optical elements, such as mirrors, relative to the light source so as to direct the light from the light source. The use of, for example, a scanning mirror or a light-steering microelectromechanical system may allow the light from the light source to be directed between different areas without movement of the light source.

It is particularly preferred that the system includes an actuator configured to move the optical sensor and/or to move one or more optical elements, such as mirrors, relative to the optical sensor so as to enable the optical sensor to detect chlorophyll fluorescence from each area irradiated with light. This is preferred as it enables the optical sensor to be aimed directly at the measurement point, and also allows for smaller field of view sensors to be used, as will be discussed in more detail below. While this is preferred, alternatively, a fixed optical sensor may be used, e.g. whose field of view covers the entire space accessible to the movable light source.

Typically, the actuator configured to move the optical sensor and/or to move one or more optical elements relative to the optical sensor is the same actuator configured to direct light from the light source, i.e. one actuator directs both the light source and the optical sensor. For example, the light source and optical sensor may both be mounted to the same body or frame, which is then moved by the actuator to simultaneously point both the light source and the optical sensor at different targets. Alternatively, the actuator may control one set of optical elements that are used to direct light from the light source and to the optical sensor. While preferred, different actuators could also be used for the light source and optical sensor. It should be noted that this does not preclude the use of additional actuators to move the light source and optical sensor relative to one another, e.g. to accommodate varying measurement distances, but it is typically simpler and therefore preferred for the at least one light source and optical sensor to be fixedly mounted relative to one another.

As noted above, having a movable optical sensor enables you to use a sensor with a smaller field of view. In particular, the optical sensor may receive light from a field of view that is smaller than the total space accessible for irradiation by the at least one light source, preferably less than 10%, more preferably less than 5%, further preferably less than 1%, most preferably less than 0.5% of the total space accessible for irradiation by the light source. The total space accessible to the light source refers to the way the actuator is able to direct the light from the light source in order to irradiate different areas of a crop canopy, which will define a working area, which may be a solid angle, within which the light can be directed to make a measurement. In absolute terms, the optical sensor may receive light from a field of view of no more than 400 deg², preferably no more than 200 deg², more preferably no more than 50 deg², most preferably no more than 25 deg². A typical camera that may be used as the optical sensor may have a field of view of 18° x 12° or less, or more preferably 6° x 4°. The use of an optical sensor with a relatively small field of view is particularly preferred for a number of reasons. Significantly, this reduces the signal to noise ration of the chlorophyll fluorescence measurement, i.e. since the irradiated area covers a greater proportion of the field of view of the sensor. Additionally, a smaller field of view means less data to transfer and process when analysing the chlorophyll fluorescence measurements, which speeds up operation of the system and limits power usage.

In many embodiments, it is preferred that the optical sensor comprises an imaging sensor, such as a camera. This is preferred for a number of reasons. Firstly, this allows the position of the irradiated area within the field of view of the sensor to be determined, which, as explained below, allows the distance to the measurement target to be determined. Additionally, this can also allow the system to construct an image of the canopy, which can be useful for assessing the state of the crop and identifying points of interest. While an imaging sensor is preferred, the system could also use a non-imaging sensor and still obtain acceptable chlorophyll fluorescence measurements. Indeed, as will be explained below, a non-imaging sensor may be preferred in some contexts.

It may also be preferred in some cases to provide an optical sensor capable of high measurement frequency, which would permit more precise measuring of the response curve of the target to the irradiating light. A high measurement frequency in this context may mean a frequency of at least 1 kHz, preferably at least 10 kHz, more preferably at least 100 kHz, most preferably at least 1MHz, which corresponds to a time interval between measurements of at most 1 ms, preferably at most 100 µs, more preferably at most 10 µs, most preferably at most 1 µs. Generally a higher measurement frequency will be preferred, as it will provide better resolution on the fluorescence response curve. Cameras are typically less preferred in this context as they will often have lower frames per second. Instead an optical sensor may be used which is non-imaging and/or outputs an analogue signal, as these are typically able to achieve higher measurement frequencies. Suitable optical sensors may include silicon photodetectors and/or a photodiode.

One problem faced by chlorophyll fluorescence measurement systems is that these are often installed in settings that use pulse width modulated grow lights. Such grow lights commonly include light in the same far-red wavelengths associated with chlorophyll fluorescence, and the pulse width modulation of this light source introduces a flicker into any images taken of the plants. This background flicker makes it difficult to determine in any one image the proportion of light coming from chlorophyll fluorescence and the proportion that is merely reflected from the grow lights. Conventionally, this has been addressed by changing the grow lights to remove the use of pulse width modulation, so that any background is constant for all images. However, systems that use an imaging sensor may further comprise a controller configured to distinguish between a target area containing the area irradiated with light from the at least one light source and at least one background area in a measurement image, the controller further being configured to adjust the detected intensity in the target area based on the detected intensity in the background area. The target area may typically be identified based on its brightness and its position and shape, i.e. it will typically be a bright point in the image whose position will be confined to certain areas dependent on the distance to the target. Computer vision techniques may be used to outline the target region more accurately, this could include image subtraction, contouring, averaging or denoising. Any point outside of this area in the image may be expected to contain predominantly reflected light from a grow light and so may be used to establish a background intensity level in the target area. It will be noted that the advantages of this technique are permitted by the way the system irradiates only a small area of the target and known techniques that bathe the target in light cannot get an instantaneous comparison with an unilluminated background area.

In these embodiments, the background area may be substantially the entire of the measurement image outside of the target area. This may make the background compensation computationally simple. Alternatively, the controller may be configured to select a part of the measurement image outside of the target area as the background area, preferably based on the detected intensities across the measurement image. For example, this may involve computer vision techniques that look to identify an area of the same plant or same leaf as at the target area, or may be based on intensity and proximity in the image to the target area, or may target a particular vertical or horizontal portion of the image to avoid background differences caused by, for example, a rolling shutter.

Adjusting the detected intensity in the target area will typically involve the controller calculating an average background intensity across the background area and subtracting the average background intensity from the detected intensity in the target area. For example, an average background intensity may be calculated by summing the intensity of each pixel in the background area and dividing by the number of pixels. Alternatively, the fiftieth percentile could be taken as the median background pixel intensity. The background value may then be subtracted from each pixel in the target area to compensate for artificial background lighting.

Another advantage of using an imaging sensor, particularly in the context of systems in which the light source comprises a laser, is that this can improve the quality of the chlorophyll fluorescence measurement by compensating for the laser irradiation profile. Preferably, the system further comprises a controller configured to identify a target area in a measurement image of the imaging sensor, the target area being a portion of the area irradiated by the one or more light sources, wherein preferably a laser is configured to irradiate a spot-shaped area with light and the target area is a central portion of the irradiated spot-shaped area. Because a laser will typically not have a flat top irradiance profile, some portions of the area irradiated with laser light may not reach the saturation threshold. Therefore, an imaging sensor may allow the controller to isolate a portion of the area irradiated with light in which this threshold is met, and the chlorophyll fluorescence measurement may be detected from this area. The target area may be determined in advance based on the characteristics of the laser or may be determined directly from the measurement image based on detection of reflected laser light or the detected chlorophyll fluorescence profile.

As set out above, there are various advantages to using both imaging and non-imaging sensors. Therefore, in some embodiments, it may be preferred to use both an imaging sensor and a non-imaging sensor. Preferably, the above optical sensor, i.e. which detects the chlorophyll fluorescence and is preferably actuated by the actuator, is a non-imaging sensor, such as a photodiode, and the system further comprises an imaging sensor, such as a camera. The non-imaging sensor will preferably output an analogue signal and/or will have a measurement frequency of at least 1 kHz, preferably at least 10 kHz, more preferably at least 100 kHz, most preferably at least 1MHz. In this embodiment, the non-imaging sensor preferably has a small field of view, as defined above. In the context of a non-imaging sensor, the field of view refers to the area from which light impinges upon the sensor, and this may be controlled by one or more optical elements, such as lenses, associated with the non-imaging sensor. Preferably, the non-imaging sensor or one or more optical elements, such as mirrors, associated with the non-imaging sensor are movable by an actuator (preferably the same actuator as directs the light from the light source) to enable the optical sensor to detect chlorophyll fluorescence from each area irradiated with light. The imaging sensor preferably has a wider field of view than the non-imaging sensor, and may be used to locate the irradiated area within the space accessible for irradiation by the light source, e.g. the crop canopy, as well as performing visual assessments of the crop. For example, the non-imaging optical sensor may have a field of view of no more than 400 deg², preferably no more than 200 deg², more preferably no more than 50 deg², most preferably no more than 25 deg², whereas the imaging optical sensor may have a field of view of at least 1000 deg², preferably at least 2000 deg², more preferably at least 5000 deg², most preferably at least 10000 deg². The imaging sensor could be substantially fixed within the system, for example, so as to provide a fixed image of the crop canopy. However, alternatively both the imaging sensor and non-imaging sensor, or optical elements associated therewith, could be actuated by the same or different actuators to be directed at each area irradiated with light. The imaging sensor may be used to determine the distance to the measurement target based on the position of the area irradiated with light in the field of view, as will be described below.

Preferably, the system further comprises an optical filter arranged to block reflected light from the at least one light source and allow the optical sensor to detect light resulting from chlorophyll fluorescence. This may be performed by locating the filter in front of the optical sensor (i.e. between the optical sensor and the area irradiated by the light source), or otherwise in the optical path between the target area and the optical sensor. Typically the light source will emit light having a different wavelength or range of wavelengths than is re-emitted as chlorophyll fluorescence. For example, a light source may be 450 nm and fluorescence may be in the range 650 nm to 750 nm. Providing an optical filter for filtering out the wavelength or wavelength range emitted by the light source enables more accurate measurements of the chlorophyll fluorescence. The wavelengths re-emitted in fluorescence are longer than those emitted by the light source, and so preferably the filter is a long-pass filter, preferably configured to block light having a wavelength of approximately 650 nm or less, or may be a band-pass filter, preferably configured to block light outside of the range 650 nm to 750 nm, preferably outside of the range 650 nm to 700 nm or 700 nm to 750 nm. The use of separate band-pass filters of 650 nm to 700 nm and 700 nm to 750 nm, independently movable into the optical path of the sensor may allow for PSI and PSII fluorescence measurements to be made separately. A particularly preferred type of filter is an interference filter. Interference filters are inexpensive, but the filtered wavelengths depend on the angle of incidence. Because only a small area is irradiated with light, the light from across this area will be incident on the filter will substantially the same angle of incidence, meaning an interference filter can be particularly effective. This is especially the case when the optical sensor is movable, since pointing the sensor at the irradiated area will mean light is always incident on the sensor from substantially the same direction, regardless of where the measurement is being made on the canopy.

In some cases it may be preferably to be able to selectively use the filter. For example, the optical filter may be movable relative to optical path of light impinging on the optical sensor in order to selectively block reflected light from the at least one light source, and preferably the optical filter may be located on a filter wheel. This can allow the systems to make additional measurement to assess the state of the crop. For example, it may be desirable to detect the amount of incident light that is reflected from the target position, or to build an accurate colour picture of the canopy, in order to infer more about the state of the crop. Alternatively, as mentioned above, it may be preferred to switch between different filters, such as a band-pass filters of 650 nm to 700 nm and 700 nm to 750 nm.

As alluded to above, another advantage of the present system is that it can build a picture of the height of the crop canopy. This may be achieved by providing a controller configured to determine a target distance based on the position the size, and/or the shape of the irradiated area within the field of view of the optical sensor. For example, if the light source is a laser with a 3mm spot size, then this can be used to infer the distance to the laser spot based on the size of the spot in the field of view of the optical sensor. Alternatively or additionally, the position of the spot in the field of view of the optical sensor may change depending on distance to the target based as a result of parallax, which can also be used to determine the distance to the target. If the relative direction that the light source and the optical sensor are pointing is changed, for example by actuation of the light source, then the position of the actuator may also be needed to determine the distance to the measurement target. Finally, the shape of the spot can be used to determine distance variance across the target area, e.g. the angle of the target with respect to the direction of the beam. For example, a circular spot may imply a target that is normal to the beam, whereas an elliptical spot may imply an inclination, with one side of the target being further from the light source than the other, and the magnitude of this inclination may be determined by the degree of elongation of the spot. This distance and inclination can be factored in to the chlorophyll fluorescence measurement, to compensate for lower detected intensity at greater distances or higher inclinations, and also as another measurement for plant growth, or to build up a 3D model of the canopy. Additionally, preferably, the power of the light source is adjusted based on the position the size, and/or the shape of the irradiated area within the field of view of the optical sensor. This may allow the system to compensate for a lower energy density of the light at greater distances or steeper inclination angles.

Preferably, the actuator has two degrees of freedom so as to enable the at least one light source (and the optical sensor, if also directed by the actuator) to irradiate different areas across two dimensions with light. The system will preferably operate by taking chlorophyll fluorescent measurements across a two-dimensional array of measurement positions. Other embodiments could have only one dimension of movement, either by measuring areas along only one direction, or by using a line focussed laser swept across the canopy.

While the system could operate with an actuator that translates the light source (and optionally the optical sensor), for example, along orthogonal directions, it is much preferred for the actuator to be configured to rotate the light source about one or more directions. For example, preferably the actuator has variable yaw and pitch so as to enable the at least one light source to irradiate different areas across two dimensions with light. That is, the actuator may rotate the light source about two different preferably orthogonal rotation axes, which are preferably substantially perpendicular to the direction along which light is emitted. It will be appreciated that the actuator may not directly rotate the light source, and could rotate a body to which the light source (and optical sensor) is mounted. This form of actuator enables a system to be mounted in a fixed position while still taking chlorophyll measurements from a relatively wide area. Alternatively, the system may have one direction of translational movement and one direction of rotational movement of the light source in order to take measurements from a two-dimensional area.

In some particularly preferred embodiments, the at least one light source and optical sensor are mounted within an enclosed housing comprising a transparent window through which the at least one light source and optical sensor may operate. In some embodiments, the actuator may also be mounted inside the housing, or alternatively the actuator may move the housing with light source and optical sensor inside. This arrangement helps to protect the system from the environment, which may be humid, for example, as well as from contact by other equipment or workers close to the system. This is particularly preferred in cases in which the actuator rotates the light source, as this allows the light source to take measurements from a wide area with only a small volume within which the light source is moved. In such embodiments, it may be preferred for the transparent window to be provided by an at least partially transparent dome-shaped element of the housing. The term "partially transparent" may be understood to mean that at least part of the dome-shaped housing portion is transparent, so that the light source and optical sensor may operate therethrough. The dome-shaped housing element may be arranged so that the light from the light source passes through part of the dome-shaped housing element in a direction substantially perpendicular to that part of the dome-shaped housing element, for substantially any direction in which the light source (and optical sensor) is oriented. This may minimise distortion of the light by the window, and also minimise distortion of light received by the optical sensor, particularly where this uses a relatively small field of view.

As has been mentioned above, preferably, the at least one light source comprises a laser. Preferably, the laser is configured to irradiate a spot-shaped area; however, alternatively a line focussed laser configured to irradiate a line-shaped area could be used. A laser is particularly useful as it produces tightly collimated light and typically irradiates a very small area, and can be selected to use light of a desired wavelength. This is therefore able to meet the required energy density threshold for irradiated areas while using a comparatively low amount of power, and is also capable of working across a wide range of distances. Preferably the laser is an adjustable power laser. This would enable the same laser to perform both the saturation and measurement pulses. Alternatively, or additionally, this may allow the laser to adjust power to compensate for the distance to the measurement target and/or variation in irradiation area due to the target being inclined relative to the direction of incidence. It will be appreciated that the light source may comprise more than one laser, for example, if it is desired to take separate measurements using light of different wavelengths. Where a laser is used, preferably the system further comprises at least one beam shaping optical element, such as a holographic diffuser. Such beam shapers may be configured to achieve a desired spot size, shape and uniformity of the laser and so improve the chlorophyll fluorescence measurement.

Another preferred type of light source for use as an alternative or in addition to a laser would be one or more LEDs (light emitting diodes). LEDs have the advantage over lasers that they are typically less expensive and require fewer safety considerations. As will be explained in more detail below, some preferred embodiments may use both one or more LEDs and one or more lasers. The use of supplementary LEDs may reduce the required power of the laser, i.e. since less power is required from the laser to reach the required energy density for saturation and measurement pulses, and so this can help make the system safer for use around workers. Nonetheless, the system may still benefit from lower power usage.

Indeed, the at least one light source may comprise a diverging light source, of which an LED may be an example, and focusing optics for substantially collimating or convergently focussing the light emitted from the diverging light source. A diverging light source, such as an LED bulb, may have at least part of its light, which is initially emitted over a wide angular range, focused by focusing optics, such as one or more lenses, to increase the energy density at the measurement target. It will be preferred for the light to be substantially collimated by the focusing optics. It will be appreciated that light collimated by focusing optics will typically be more loosely collimated than a laser, for example, and so may suffer from a greater variation in the size of the irradiated area depending on the distance to the measurement target. In some cases, it may be preferred to convergently focus the light. This may be useful for irradiating a small area, comparative with a laser spot, at a predetermined distance. In other cases, the focusing optics may be adjustable, and may vary the focus of the light depending on the distance to the measurement target.

Regardless of the type of light source used, preferably the light source is an adjustable power light source, to allow the light source to perform both saturation and measurement pulses, and to adjust the power based on the distance to the target.

As mentioned above, the system may comprise a plurality of light sources, each configured to emit substantially collimated or convergently focussed light and arranged so as to irradiate a common area with light. Irradiating of a "common area" will be understood to mean that the two light sources at least partially overlap where they impinge upon the target. It should be noted that the light sources do not necessarily have to irradiate precisely the same area. For example, it may be common for the spot from a focussed LED to be larger than the spot from a laser, which could nonetheless be directed at the same target and would define a common area irradiated by both light sources. It should be noted that it is not necessarily required that all light sources carried by the system irradiate one and the same common area. For example, the system may comprise a first laser and one or more LEDs emitting light at a first wavelength for a first measurement type, and a second laser and/or one or more LEDs for emitting light at a different second wavelength for a second measurement type, and the light from these sources would not necessarily need to overlap, and indeed it may be preferred that they do not overlap.

As alluded to above, different types of light sources have their own advantages, and so it may be preferred to integrate different types in the same system in order to benefit from the strengths of each. Therefore, preferably a first of the plurality of light sources comprises a laser, preferably an adjustable power laser, and a second of the plurality of light sources comprises a diverging light source (e.g. one or more LEDs) and focusing optics for substantially collimating or convergently focussing the light emitted from the diverging light source. As noted above, supplementing a laser with one or more focussed light sources of this type can reduce the required laser power in order to reach the energy density needed for saturation and measurement pulses, and so make the system safer for use around workers. Indeed, in most cases, more than only two light sources will be used. Preferably a third of the plurality of light sources comprises a diverging light source and focusing optics for substantially collimating or convergently focussing the light emitted from the diverging light source. In these preferred cases, you may have an array of diverging light sources and focusing optics, and at least one laser, all configured to irradiate a common area with light in order to measure chlorophyll fluorescence. The plurality of light sources, particularly the plurality of divergent light sources (e.g. LEDs) and associated focusing optics, may be arranged in a ring array around the optical sensor. A ring array of light sources is advantageous, since it improves the uniformity of the light on the measurement target at different irradiation directions.

Where a laser is used in combination with a diverging light source (e.g. one or more LEDs) and focusing optics for substantially collimating or convergently focussing the light emitted from the diverging light source, preferably the laser is an adjustable power laser and the system further comprises a controller configured to adjust the power of the laser based on a target distance and/or based on the power of the second light source and/or the beam divergence of the second light source. As mentioned above, a diverging light source with focusing optics will typically suffer from a greater variation in the illuminated area as a function of the distance to the measurement target. By using an adjustable laser, the laser power may be varied in order to accommodate this. For example, where the target is close and the light from the diverging light source with focusing optics is concentrated in a small area, a lower power laser spot may be needed to reach the energy density required for a saturation pulse or measurement pulse. On the other hand, where the target is further away, because collimation may not be perfect or because the target is beyond the focal point of a convergent focus, the light may be spread out over a larger area and so require more power from the laser in order to reach the required energies. Adjustment of the laser may also be based on the position, the size and/or the shape of the irradiated area (either by the laser or by the diverging light source and focusing optics) within the field of view of the optical sensor, which may be indicators of distance to the target and its inclination, as explained above.

As has been mentioned above, it may be desired to use light of different wavelengths or wavelength ranges in measurements made using the system, a system with a plurality of light sources may therefore comprise at least two of the plurality of light sources which emit light having a wavelength or range of wavelengths different from each other. While this is possible, it would also be possible to have a system that used light only of one wavelength, or range of wavelengths.

Many advantages of the present system come from constraining the system to act on small target areas during any one measurement. Preferably, the or each light source is configured to irradiate an area of less than 50 cm², preferably less than 25 cm², more preferably less than 5 cm², even more preferably less than 1 cm², most preferably less than 5 mm², at a predetermined working distance. It will be appreciated that a focused LED, for example, may irradiate a larger area than a laser, with a laser typically having a spot size of less than 1 cm² and often less than 5 mm². Generally, a smaller irradiation area is preferred, as this allows a smaller field of view sensor to be used, which reduces noise and data processing requirements, and also reduces energy used by the light source in reaching the target energy density. The predetermined working distance may be in the range 0.1 m to 20 m, preferably in the range 0.1 m to 10 m, more preferably in the range 0.1 m to 5 m, most preferably in the range 0.5 m to 1 m. The size of the irradiated area is determined by the collimation or convergence of the emitted light and the distance from the light source that the light impinges upon the target. Typically, the system will be configured to work across a range of distances, and so it may be preferred that the target irradiation area size is achieved across the whole working range, which may be 0.1 m to 20 m, preferably 0.1 m to 10 m, more preferably 0.1 m to 5 m, most preferably 0.5 m to 1 m. This may be simply achieved by ensuring that a substantially collimated light source meets the target irradiation area size at both extremes of the working range. In one notable example, the or each light source is configured to irradiate an area of less than 50 cm², at least at one working distance in the range 0.1 m to 20 m, preferably across the whole working range. Where a laser is used, the area irradiated may be less than 1 cm² across the whole range 0.1 m to 20 m. It is, however, more likely as a result of limitations on detection of the fluorescence at large distances that the system will have a smaller working range, and as a result smaller irradiated areas will be achievable. In one such example, the or each light source is configured to irradiate an area of less than 25 cm² at least at one working distance in the range 0.1 m to 10 m, preferably across the whole of said range. In another example, the or each light source is configured to irradiate an area of less than 10 cm² at least at one working distance in the range 0.1 m to 5 m, preferably across the whole of said range. Again, a laser in particular may irradiate an area of less than 1 cm² across working ranges of 0.1 m to 10 m, or 0.1 m to 5 m. Of course, it will be apparent that the working range and irradiated area can be configured as required for a particular installation by appropriate selection of the light source and the optical sensor.

In many embodiments, there is also provided a controller configured to: a) irradiate a first area with light using the at least one light source; b) detect chlorophyll fluorescence from the first area using the optical sensor; c) redirect the at least one light source using the actuator; d) irradiate a second area with light using the at least one light source; and e) detect chlorophyll fluorescence from the second area using the optical sensor. The controller will typically repeat steps c), d) and e) for further measurement targets, i.e. by successively irradiating different areas with light using the light source and detecting chlorophyll fluorescence from said areas across a two-dimensional array of measurement positions. This allows the system to build a picture of plant growth across the canopy of the crop with a limited number of measurements.

The system may be connected to the controller and/or a data processing and/or storage device, via a network, preferably the internet. For example, the data collected by the system may be communicated to a cloud processing and/or storage network via the internet. The system may comprise a WiFi or ethernet connection module, for example, for connecting to such a network.

A plurality of systems may be provided, each as described above, for measuring chlorophyll fluorescence of plants in different areas. Each of these systems may be connected to the same network for control and/or for collecting the measurement data.

Measurements may be reported to an operator, e.g. grower, through an interface, such as a display, connected to one or more systems, or may be reported on an operator's device via an API. Where multiple systems are provided, measurements may be reported and attributed to the respective system from the which the detections were made.

An advantage of the present system is that the same light source can be used for both saturation pulses and measurement pulses. Preferably, the controller is configured to irradiate each of the first and second areas with a plurality of pulses of light of different intensities and/or durations. In particular, this may involve a first measurement phase comprising irradiating each area with at least one, preferably a plurality of measurement pulses having lower intensity, lower frequency and/or shorter duration (relative to a second measurement phase) to provide a so-called F0 measurement. In this first measurement phase, the light will typically be modulated in intensity with a low average intensity (again relative to the second phase). This will typically involve modulation between low intensity on states and an off state, although it could be varied between two different intensities, both of which may be low relative to pulses in the second measurement phase. Then, the second measurement phase may typically involve irradiating said area with at least one saturation pulse having higher intensity, higher frequency and/or longer duration than the pulses in the first measurement phase to provide a so-called Fm measurement. In this second measurement phase, the light will typically be modulated in intensity with a high average intensity relative to the first phase. This may comprise varying the light between two different intensities, both of which will typically be higher than any of the intensities used in the first measurement phase. After performing the second measurement phase, a third phase will typically follow, in which the lower intensity, lower frequency and/or shorter duration measurement pulses resume, e.g. in which the light will typically be modulated in intensity with a low average intensity (relative to the second measurement phase), such as between low intensity on states and an off state.

In one particularly preferred embodiment the controller is configured to control the at least one light source to irradiate each area with light such that, in a first measurement phase, the light is modulated in intensity to define one or more pulses of light with a low average intensity (relative to a second measurement phase), and in the second measurement phase, the light is modulated in intensity to define a plurality of discrete different pulse types, together having a high average intensity. This is different to measurements made with a saturation pulse in a conventional measurement process, as the saturation pulse (i.e. the second measurement phase in the present terminology) will typically comprise a single light pulse that is formed by the superposition of a number of different light pulses.

Preferably the intensity of irradiated light at the target area returns to substantially zero between each pulse type. It is preferable for the light intensity to return to zero between each pulse type, as this helps with the linearity requirements of the light source. However, alternatively, the intensity could return to a low baseline intensity between pulses.

In the present example, preferably the second measurement phase comprises a plurality of light pulses of a first pulse type and a plurality of light pulses of a second pulse type, wherein the light pulses of the second pulse type occur between the light pulses of the first pulse type, wherein preferably the first and second pulse types alternate. The first pulse type preferably involves the light being modulated from a low value, preferably an off state, to a first high value, such that said first pulse type has a first intensity and duration before returning to the low value, and the second pulse type preferably involves the light being modulated from the same low value, preferably the off state, to a second high value (which may be the same or different from the first high value) such that at least one, preferably both, of the intensity and duration of the second pulse type differs from that of the first pulse type in the second measurement phase. Indeed, typically, the pulses will differ in duration by several orders of magnitude. The second measurement phase here is analogous to a conventional saturation pulse; however, in the present example, the target is irradiated with a saturation pulse, which is then switched off for a short period and during this period in which the saturation pulse is off, the target is irradiated with a measurement pulse.

The above measurement profile has a number of advantages. The pulse profile is not sensitive to a rise or fall time, and is not highly sensitive to amplitude, i.e. intensity. Linearity requirements of the light source are reduced and the switch on current sensitivity is reduced. Laser safety is also improved, since two laser pulses are not superimposed.

In another preferred embodiment, the controller is configured to control the at least one light source to irradiate each area with light such that, in a first measurement phase, the light is modulated in intensity to define one or more discrete pulses of light making up a first proportion of the first measurement phase and having a low average intensity (relative to a second measurement phase), and such that in a second measurement phase, the light is modulated in intensity to define a plurality of discrete pulses making up a second proportion of the second measurement phase greater than the first proportion and having a high average intensity. The proportion of the measurement phase refers to the amount of time at which the light intensity is at a high value, e.g. the light being on, compared with the amount of time at which the light is at a low value, e.g. the light being off. The second measurement phase should have a higher proportion at the high intensity value that the first measurement phase to provide a higher average intensity. For example, these different proportions may be provided by providing the pulses in the first measurement phase with a lower frequency that the pulses in the second measurement phase. Preferably the pulses in the second measurement phase have a frequency of between 5 and 1000 kHz, preferably between 10 and 1000 kHz, more preferably between 10 and 500 kHz, so that the biological response of a crop is not affected by the light frequency and only responds to the average intensity.

Preferably, the light pulses in the first measurement phase have the same intensity as the light pulses in the second measurement phase. Preferably the light pulses in the first measurement phase have the same duration as the light pulses in the second measurement phase. Preferably the light pulses in the first measurement phase are the same as the light pulses in the second measurement phase and differ in frequency in order to provide the different average intensities.

In this embodiment, the conventional saturation pulse (equivalent to the present second measurement phase) is replaced with a train of high frequency pulses. These pulses can be the same as the measurement pulses used in the F0 measurement (the first measurement phase in the present terminology). The pulse amplitude, duration and duty cycle during the first measurement phase can be calculated to achieve a low average illumination during the first measurement phase so that photosynthesis is not triggered, and to achieve saturation of reaction centres during the second measurement phase.

An advantage of using only one pulse type, as in this embodiment, is that the driver for generating the pulses can be simple. The pulse profile is also not sensitive to rise or fall time and is not highly sensitive to amplitude of the pulse. Linearity requirements of the light source are reduced and the switch on current sensitivity is reduced. This technique means the detector can use a lock-in amplifier. Laser safety may be improved since a single amplitude may be used, which may be lower than the peak amplitude required in a typical saturation pulse. Finally, an important advantage of this measurement technique is that the high frequency pulses allow measurements to be made at high frequency, particularly with non-imaging sensors. This allows measurements of chlorophyll fluorescence kinetics, such as OJIP.

The conversion of light intensities captured by a detector system into a chlorophyll fluorescence measurement (Fo, Fm) may require additional processing steps to obtain a representative fluorescence intensity from the plant leaf. This is due to a typical laser spot profile having a gaussian distribution of power intensity and only the central region will have sufficient light intensity for measurement. As such, the isolated region for calculating fluorescence intensity should be constrained to the central region. The region should be calculated to ensure non-overlapping, symmetrical normal distributions for the fluorescence intensities returned by the detector at each excitation intensity. In the case of an image sensor, computer vision techniques can be used to first detect the region of interest as described above, and then refine the specific pixels of interest to ensure accurate measurement.

In many embodiments, the optical path between the or each light source and the target and the optical path between the target and the optical sensor impinge upon the target area at different angles. This may be a result of spacing the light source and the optical sensor apart and aiming them at the same target. In some contexts, such an arrangement is advantageous and indeed we have already explained how this parallax may be used to help determine the distance to the target. However, in other contexts, it may be preferred to have a co-axial arrangement whereby the optical paths are substantially the same at the target. Therefore, some embodiments further comprise a beam splitter or optical coupler, wherein the light source is arranged so as to irradiate said area, i.e. the target area, along a first optical path through the beam splitter or optical coupler and wherein the optical sensor is arranged to receive chlorophyll fluorescence emitted from said area along a second optical path different from the first optical path through the beam splitter or optical coupler, wherein the light source and the optical sensor are arranged such that the optical paths are substantially co-axial, i.e. the same, between the beam splitter or optical coupler and said irradiated area. In other words, the irradiation direction at the target is substantially the same as the sensing direction of the sensor. Both a beam splitter and an optical coupler convert each input direction to two output directions and the present arrangement uses one of the two outputs from the light source to then receive the fluorescent light as an input, with the optical sensor being arranged on a vacant output of this fluorescent light. This allows the optical sensor to be provided effectively on axis with the light source via the beam splitter or optical coupler. This may provide that the fluorescence from the target area is always incident on the optical sensor in the same place, e.g. regardless of the nature of the target, which can make measurements faster by removing the need to identify the target.

In these embodiments, where an optical filter is used, the filter should be arranged between the beam splitter or optical coupler and the optical sensor, i.e. so that the first optical path does not pass through the filter. In this way, the irradiating light is not affected by the filter, and only the fluorescent light bound for the optical sensor is filtered.

One advantage of the use of a beam splitter is that this may further comprise focusing optics between the beam splitter and said area to be irradiated, the focusing optics being configured to substantially collimate or convergently focus light from the light source and to collimate or convergently focus chlorophyll fluorescence from said area towards the optical sensor. Hence, one set of optics can be used for shaping the light from the light source as is used to shape the light being directed onto the sensor. This may make the system less expensive to produce.

One advantage of the use of an optical coupler is that the light source may be configured to emit light into a first end of a first optical fiber and the optical sensor configured to receive light from a first end of a second optical fiber, said first and second optical fibers being coupled together by the optical coupler so that a second end of either the first or second optical fiber emits light from the light source to irradiate said area and said second end receives chlorophyll fluorescence from said area, wherein preferably the actuator is configured to controllably direct the light from the light source by moving said second end of either the first or second optical fiber In particular, this arrangement means that the light source and the optical sensor can remain stationary, and the directing of the light and aiming of the optical sensor performed by moving the optical fibers. In such an embodiment, it may be preferred to include focusing optics for collimating or convergently focusing light emitted from the second end of either the first or second optical fiber towards the target and also for focussing chlorophyll fluorescence for coupling it into the optical fiber.

The above embodiments are particularly advantageous when used with non-imaging optical sensors. This is because the chlorophyll fluorescence will always be incident in the same place on the optical sensor and no imaging is required to identify the target area within a field of view. As mentioned above, non-imaging sensors are typically capable of a higher measurement frequency, which can be useful for measuring the pulse response curve.

In accordance with a second aspect of the invention, there is provided a method of measuring chlorophyll fluorescence, the method comprising: a) irradiating a first area with light using at least one light source configured to emit substantially collimated or convergently focussed light; b) detecting chlorophyll fluorescence from the first area using an optical sensor; c) moving the at least one light source using an actuator; d) irradiating a second area with light using the at least one light source; and e) detecting chlorophyll fluorescence from the second area using the optical sensor.

This method corresponds to a method of measuring chlorophyll fluorescence using the system according to the first aspect of the invention, in which the light source is movable by an actuator in order to selectively irradiate different areas for testing. Each of the advantageous features described above with respect to the first aspect of the invention may likewise be implemented in the method according to this aspect.

It will be appreciated that steps c), d) and e) may be repeated for one or more further areas. These further areas may include areas different from the first and second areas, but could also include repeating measurements at substantially the same first and/or second areas, e.g. at a later time, in order detect changes in the chlorophyll fluorescence over time. The present method may be used to provide real time monitoring of plant photosynthetic efficiency, the conversion of light photons into excited electronic states in a photochemical process, by measuring chlorophyll fluorescence over time and reporting changes to an operator, e.g. grower.

This method may be used to determine common chlorophyll fluorescence metrics, such as Fv/Fm, from the detected chlorophyll fluorescence. The method may also be used to monitor and report plant growth and productivity. For example, chlorophyll fluorescence metrics may be measured over time and changes identified and reported to an operator, e.g. the grower. From these monitored metrics, it may be possible to recommend changes to the environment of the plant measured. For example, the method may involve recommending changes to one or more of lighting, e.g. artificial lighting, temperature, water, humidity, CO₂ or O₂ concentration, soil nutrient concentration and soil pH based on the detected chlorophyll fluorescence or the change in the detected chlorophyll fluorescence over time.

In accordance with a further aspect of the invention, there is provided a method of measuring chlorophyll fluorescence, the method comprising: irradiating a first area with light using at least one light source, wherein irradiating the first area comprises irradiating the first area with light such that, in a first measurement phase, the light is modulated in intensity to define one or more pulses of light with a low average intensity, and in a second measurement phase, the light is modulated in intensity to define a plurality of discrete different pulse types, together having a high average intensity, wherein preferably the intensity of irradiated light at the target area returns to substantially zero between each pulse type in the second measurement phase; and detecting chlorophyll fluorescence from the first area using an optical sensor. Preferably the second measurement phase comprises a plurality of light pulses of a first pulse type and a plurality of light pulses of a second pulse type, wherein the light pulses of the second pulse type occur between the light pulses of the first pulse type, wherein preferably the first and second pulse types alternate. The first pulse type preferably involves the light being modulated from a low value, preferably a substantially off state, to a first high value, such that said first pulse type has a first intensity and duration before returning to the low value, and the second pulse type preferably involves the light being modulated from the same low value, preferably the substantially off state, to a second high value (which may be the same or different from the first high value) such that at least one, preferably both, of the intensity and duration of the second pulse type differs from that of the first pulse type in the second measurement phase.

In accordance with another aspect of the invention, there is provided a method of measuring chlorophyll fluorescence, the method comprising: irradiating a first area with light using at least one light source, wherein irradiating the first area comprises irradiating the first area with light such that in a first measurement phase, the light is modulated in intensity to define one or more pulses of light making up a first proportion of the first measurement phase and having a low average intensity, and such that in a second measurement phase, the light is modulated in intensity to define a plurality of discrete pulses making up a second proportion of the second measurement phase different from the first proportion of the first measurement phase and having a high average intensity. Again, the proportion of the measurement phase refers to the amount of time at which the light intensity is at a high value, e.g. the light being on, compared with the amount of time at which the light is at a low value, e.g. the light being off. The second measurement phase should have a higher proportion at the high intensity value that the first measurement phase to provide a higher average intensity. For example, these different proportions may be provided by providing the pulses in the first measurement phase with a lower frequency that the pulses in the second measurement phase. Preferably the pulses in the second measurement phase have a frequency of between 5 and 1000 kHz, preferably between 10 and 1000 kHz, more preferably between 10 and 500 kHz, so that the biological response of a plant is not affected by the light frequency and only responds to the average intensity. Preferably, the light pulses in the first measurement phase have the same intensity as the light pulses in the second measurement phase. Preferably the light pulses in the first measurement phase have the same duration as the light pulses in the second measurement phase. Preferably the light pulses in the first measurement phase are the same as the light pulses in the second measurement phase and differ in frequency in order to provide the different duty cycle ratio and hence the different average intensities. In this embodiment, the conventional saturation pulse (equivalent to the present second measurement phase) is replaced with a train of high frequency pulses. These pulses can be the same as the measurement pulses used in the F0 measurement (the first measurement phase in the present terminology).

### Brief Description of the Drawings

The invention will now be described with reference to the accompanying drawings, of which:
Figure 1 shows, schematically, a system according to a first embodiment of the invention;
Figure 2 shows a perspective view of a system according to the first embodiment of the invention;
Figure 3 shows a perspective view of a part of the system according to the first embodiment of the invention;
Figure 4 shows a side view of a part of the system of the first embodiment of the invention;
Figure 5 is a flow diagram illustrating operation of the system;
Figure 6 is a measurement image taken during operation of the system;
Figure 7 shows, schematically, a system according to a second embodiment of the invention;
Figure 8 shows, schematically, a system according to a third embodiment of the invention;
Figure 9 shows, schematically, a system according to a fourth embodiment of the invention;
Figure 10 shows, schematically, a system according to a fifth embodiment of the invention;
Figure 11 shows, schematically, a system according to a sixth embodiment of the invention;
Figure 12 is a graph showing light intensity over time for a first method of measuring chlorophyll fluorescence;
Figure 13 is a graph showing light intensity over time for a second method of measuring chlorophyll fluorescence; and
Figure 14 is a graph showing light intensity over time for a third method of measuring chlorophyll fluorescence.

### Detailed Description

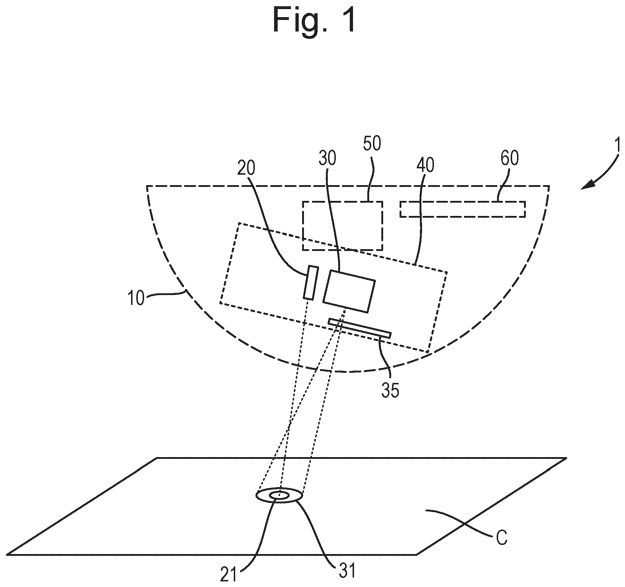

A first embodiment of the invention will now be described with reference to Figures 1 to 4.

Figure 1 shows the system schematically, illustrating the primary components and their use in taking a measurement. The system 1 comprises a dome-shaped housing 10, which encloses a laser 20 and a camera 30 mounted on a support 40. The support is connected to an actuator 50, which moves the support 40 within the housing 10 so as to change the direction in which the laser 20 and camera 30 are pointed. The housing also encloses a controller 60, which controls the operation of the actuator, laser and camera.

As shown in Figure 1, the dome-shaped housing 10 is mounted by its substantially flat base over a canopy C of plants being grown in an area below, so that the dome part of the housing projects downwards. In this arrangement, the support 40 is manoeuvred by the actuator 50 to point the laser 20 and camera 30 at a target in the canopy C below. The laser 20 irradiates an area 21 with light and is controlled by the controller 60 to emit a saturation or measurement pulse in accordance with the type of measurement being made. The target may be between 0.5 and 1 meter from the system 1, and the laser spot size at this distance may be around 2 mm in diameter. The camera 30 has a field of view 31 of the canopy which encompasses the area 21 irradiated by the laser light. The camera may have a field of view corresponding to an area of the canopy of around 20 cm² at the distance of between 0.5 and 1 meter. A filter 35 is positioned between the camera 30 and the target so that the light emitted from the target as chlorophyll fluorescence is detected by the camera 30 and the reflected light from the laser spot 21 is filtered out by the filter 35.

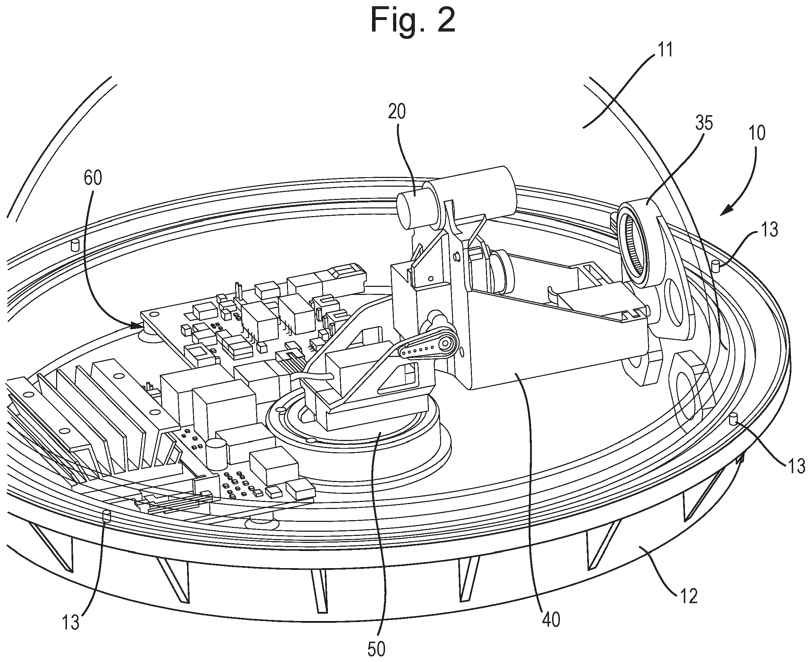

Figure 2 shows the system in more detail with the camera 30 omitted and shows that the dome-shaped housing 10 comprises a transparent dome-shaped cover 11, which is attached to a circular base 12 with a raised rim at its periphery. The cover 11 is attached to the circular base 12 by screws (not shown) that connect through screw holes 13 in a peripheral lip of the cover 11, and fasten the cover 11 to the base 12. The remaining components of the system are then enclosed within the housing, being contained between the base 12 and the cover 11, with the optical components, i.e. the laser 20 and the camera 30 still able to operate through the transparent cover 11. The entire system 1 may be mounted over a canopy by attaching the base 12 to a surface over the canopy, such as the ceiling, via screw holes (not shown) or other attachment means of the base 12.

Within the housing 10 are control electronics 60. This includes a controller for the actuator 50, a controller for the laser 20, and a controller for the camera 30, which are coordinated to take a series of measurements of different targets in the canopy C below the system. These control electronics are mounted on the base 12 of the housing 10 so that they are stationary during use.

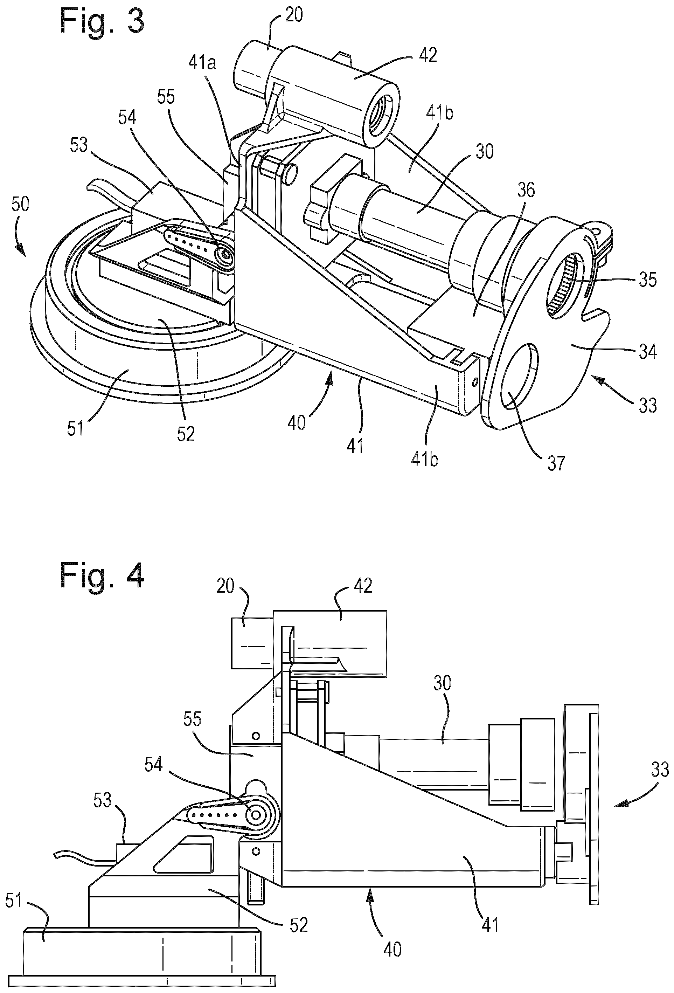

Also within the housing 10, as mentioned, are the laser 20, camera 30, support 40 and actuator 50, which are shown in isolation in Figures 3 and 4. The actuator 50 comprises a ring-shaped base 51 inside of which is mounted a platform 52 having a circular part that is received in the base 51 and a mounting portion. On the mounting portion is located a pan servo motor 53, which operates through a central axis through the platform and is preferably capable of rotating the platform through 360°. Also mounted to the platform 52 via an axis 54 is a tilt servo motor 55. The tilt servo motor is preferably capable of rotating 90° in this configuration, relative to the platform 52. An actuator of this type, with variable yaw and pitch, is able to point the laser and the camera across a wide area and so survey a large canopy with a small footprint. The dome-shaped housing ensures that no matter where the laser and camera is pointed, they are always substantially perpendicular to the region of the housing between them and the target.

The support 40 is a piece of moulded plastic that attaches to the housing of the tilt motor 55 of the actuator 50 and supports both of the laser 20 and the camera 30, along with the filter 35. The support 40 comprises, in particular, a camera-holding portion 41 and a laser holding portion 42. These are arranged so that both the laser 20 and the camera 30 are pointed along the same direction, i.e. parallel with one another, with the laser 20 being spaced a few centimetres above the camera 30.

The camera-holding portion 41 includes a rear plate 41a, to which the camera 30 is attached, pointing away from the rear plate and towards the target. It also comprises two arms 41b, which extend forwards from the rear plate 41a, beneath the camera barrel. The two arms connect at their forward end to the filter assembly 33. The filter assembly comprises a filter wheel 34 connected to a filter motor 36 mounted on end of the arms 41b. The filter motor 36 operates to rotate the filter wheel 34 so that either filter 35 or filter 37 within the filter wheel may be placed in front of the camera 30. The filter 35, which is held in front of the lens of the camera, may be a long-pass interference filter, which filters out perpendicularly incident light having a wavelength of less than 650 nm, to allow the camera 30 to measure the fluorescence in the range 650 to 750 nm, or may be a band-pass filter, blocking all light outside of the range he range 650 to 750 nm. Filter 37 may be a different filter, such as a band-pass filter of 650 to 700 nm or 700 nm to 750 nm, for acquiring PSI or PSII fluorescence in isolation. Alternatively, filter 35 may be a band-pass filter of 650 to 700 nm and filter 37 a band-pass filter of 700 nm to 750 nm to allow the system to measure both PSI and PSII fluorescence independently of one another.

The laser-holding portion 42 of the support 40 is a substantially cylindrical sleeve that is open at both ends, with a smaller opening at the front end, through which the laser beam is emitted. The laser-holding portion 42 receives a substantially cylindrical laser in the open rear end, which points forwards through the open front end.

The laser 20 itself is configured to emit collimated light having a wavelength of approximately 450 nm, with a beam diameter of 3 mm and should be capable of delivering saturation pulses lasting approximately one second to the target having an average photosynthetic photon flux density (PPFD) of 8000 µmol m⁻² s⁻¹. The laser should also be capable of delivering measurement pulses lasting between 1 µs and 10 ms.

The camera 30 may be an OV9281 manufactured by OmniVision^{®} of 4275 Burton Drive, Santa Clara, California 95054 USA. This camera may be configured with a relatively small field of view of 6° x 4°, which decreases the noise in the signal and increases the sensitivity to the area irradiated by the laser. As mentioned previously, the field of view of the camera must be large enough for the laser spot to be visible across the working range of the system. In embodiments in which the laser 20 and the camera 30 are pointed parallel to one another, the laser spot will be in the centre of the field of view at infinity, and will be closer to the top of the field of view the closer the target is to the system. Indeed, as we have mentioned before, the position of the laser in the field of view of the camera, as well as the spot size, can be used to determine the distance to the target. In other embodiments, the laser and the camera may not be parallel and may instead define a small but fixed angle in the direction they are pointed, so that the laser spot is in the middle of the field of view of the camera roughly in the centre of the working range of the system. This may cause the spot to move across the full field of view of the camera depending on the distance to the target, and so offer greater sensitivity in measuring the distance to the target. An angle of approximately 8° has been found to be suitable for a typical separation distance of camera and laser and for a working distance in the range 0.5 to 1 m, although it will be appreciated that these can be configured as needed depending on the particular system installation, including the working range and the spacing of the camera and laser. In other embodiments, the angle between the laser and the camera could be adjustable. The control system may adjust the angle between the laser 20 and the camera 30 until the spot is in the centre of the field of view, and then the distance to the target determined by the angle between the camera and the laser needed to achieve this centring of the laser spot.

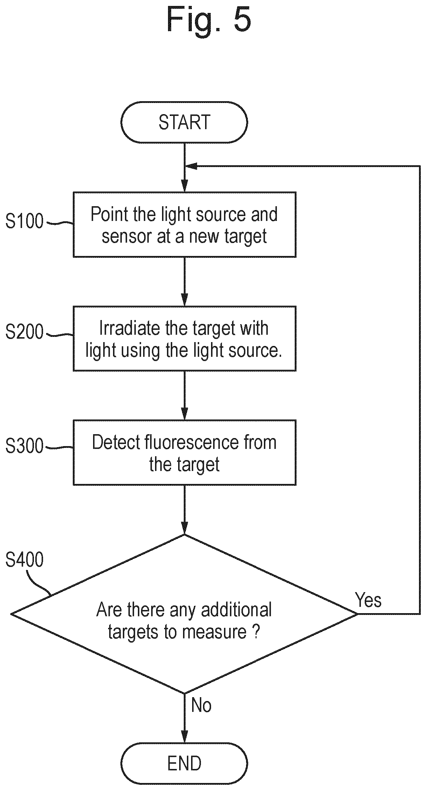

Figure 5 is a flow diagram illustrating the basic operation of the system according to this embodiment. Once a measurement process is started, in step S100, the actuator 50 is used to point the light source, i.e. the laser 20, and the sensor, i.e. the camera 30, at a new target in the canopy C below. This target may, for example, be taken from memory stored within the control electronics 60, and will typically be one of a two dimensional array of targets in the canopy below. This may be a regular array of targets, e.g. one target every 5 cm in two dimensions in a regular square grid in a plane at a distance of 0.75 m from the system. Alternatively, the targets may be pre-programmed points of interest in the canopy.

Now that the laser and camera are pointed at the target, in step S200, the target is irradiated with light using the laser. Typically, a first measurement (so-called F0 measurement) will comprise a series of pulses, which in one example have an amplitude of up to 6000 µmol m⁻² s⁻¹, pulse width of 0.1 µs to 100 µs and period of up to 10 s so as to deliver an average PPFD at the target of as low as approximately 0.1 µmol m⁻² s⁻¹ over a measurement interval. To measure saturation (so-called Fm measurement), instead, a saturation pulse is delivered. The intensity of the saturation pulse may be varied, but in one example this is configured to provide an average PPFD at the target of approximately 8000 µmol m⁻² s⁻¹, over an interval of approximately 0.8 s. The saturation pulse may itself comprise a series of pulses from a lower amplitude to a higher amplitude, both in the range 8000 to 14000 µmol m⁻² s⁻¹, having a pulse width of 0.1 µs to 10 ms and a period of between 10 and 100 ms.

As mentioned above, before executing the required irradiation profile, the controller may first determine the distance to the target by irradiating the target and detecting the position of the light source in the field of view of the sensor, before adjusting the power of the light source so that the correct PPFD is reached accounting for any known variation in the spot size with distance as a result of beam divergence, and accounting for the inclination angle of the target relative to the beam.

In step S300, fluorescence is detected from the target using the camera. While this step is shown after step S200, it will be appreciated that these steps will largely be running in parallel, with the camera continuously detecting the fluorescence levels over time during the course of the irradiation step. The camera may take a series of images of the target during this step, and this may correspond to different measurement types. For example, the light source may initially irradiate the target with the lower energy pulses for an F0 measurement, during which time the camera may take a series of images, and then the light source may irradiate the target with higher energy pulses for an Fm, measurement, during which time, again, the camera may take a series of measurement images.

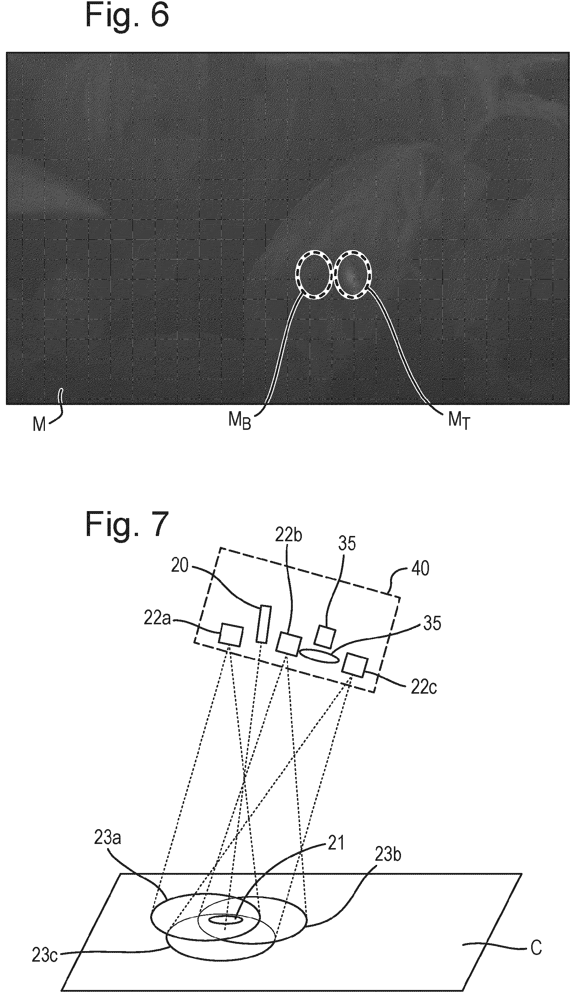

Figure 6 shows one measurement image M taken using the camera through a band-pass filter, as described above. In some embodiments, the controller may perform a background compensation technique on each measurement image M. In particular, this technique involves identifying a target area M_{T} containing the pulse-induced fluorescence. This area is typically identified as the brightest area conforming to the expected profile of the light source; in this case, the target is expected to be a roughly circular spot. Then, the controller identifies a background area M_{B} in the measurement image M. In some embodiments, the background may simply be the entire area outside of the target area M_{T}; however, in this embodiment, the controller identifies only a part of the measurement image outside of the target area to serve as the background area. This may be, for example, a comparably shaped and sized area adjacent to the target area, or may involve selecting a portion of the same plant or leaf as contained in the target area using computer vision techniques. To compensate for any background light not due to chlorophyll fluorescence, the controller determines the average intensity of each pixel in the background area M_{B}. The controller may then subtract this average background intensity from each pixel in the target area M_{T} in order to get a background adjusted measurement of chlorophyll fluorescence.

The method may also involve identifying from an image, such as shown in Figure 6, a portion of the image from which the chlorophyll fluorescence is to be measured. As described above, because the light source used will typically not have a flat top irradiance profile, some portions of the area irradiated with laser light may not reach the saturation threshold. Accordingly, an edge region of the target area M_{T} may skew the fluorescence measurement data. Therefore, from the camera image, the controller may isolate a central portion of the area irradiated with light in which the required threshold is met, and the chlorophyll fluorescence measurement may be detected only from this area, optionally as adjusted to compensate for background light, as described above. For example, the central 50% of the irradiated spot, as seen by the camera, may be selected for the measurement of the chlorophyll fluorescence.

In step S400, the controller checks whether there are any additional targets which require measurement. If there are, the process returns to step S100, and the controller points the light source and the sensor at a new target before repeating steps S200 and S300. If there are no targets remaining, then the process ends.

Figure 7 shows another embodiment of the invention in schematic form. This embodiment shows, in particular, the use of a plurality of light sources of different types, and illustrates their irradiating of a common target area. For simplicity, Figure 7 shows only the support 40, camera 30, filter 35, and a plurality of light sources. This Figure omits the housing 10, actuator 50 and controller 60, which may be substantially as described above.

In this embodiment, the light source comprises a laser 20, which is substantially as described before in relation to the first embodiment, along with three further light sources 22a, 22b, and 22c. While only three further light sources are shown in this embodiment, it will be appreciated that more may be used.

Each of these further light sources is an LED along with associated focusing optics. Each LED should emit the same wavelength of light as the laser 20, in this case approximately 450 nm, if they are intended to be used together in the same measurement process. The focusing optics comprises, in this case, a collimating lens so that each light source 22a, 22b, 22c emits substantially collimated light, but could also comprise a condensing lens for emitting converging light targeting a focal point in the centre of the working range, or an adjustable set of lenses for adjustably focusing the light at a target distance.

The further light sources are arranged in a ring array surrounding the camera 30 so that they are each equidistant from the camera 30 located in the centre. In some embodiments, each alternating LED may have one of two wavelengths or wavelength ranges, so that the further light sources can perform measurements using two different wavelengths of light. In such an embodiment, this may be supplemented by a second laser having the second wavelength, and an adjustable filter wheel 35 may also be provided to accommodate the different types of measurement utilising different wavelengths of interest.

Each light source 22a, 22b, 22c irradiates a respective area 23a, 23b, 23c in the canopy below. For most measurements, the irradiated areas will only partially overlap and this is demonstrated in an exaggerated manner in Figure 7. The light sources may be aimed parallel with one another, in which case their spot separation, and hence the overlap, will be determined by the spacing of the light sources and the beam divergence. Alternatively, the light sources may be aimed inwards so that they fully overlap at a predetermined distance from the system, but in such a case the light sources will only partially overlap either side of this predetermined distance. As a yet further alternative, the light sources could be adjustable so that their spots can be aligned for each measurement distance.

As shown in Figure 7, the laser 20 is pointed so that the laser spot 21 overlaps each of the areas 23a, 23b, 23c irradiated by the light sources 22a, 22b, 22c. Thus, an area of the canopy is irradiated with light from each of the light sources 20, 22a, 22b, 22c, and this common area is the measurement target from which the camera will detect the chlorophyll fluorescence.

The light sources 22a, 22b, 22c will typically have a greater beam divergence than the laser 20. As a result, the spot size will increase more as the distance to the target increases, and so the energy density at the target will decrease with distance more so than with a more tightly collimated laser. To compensate for this, the control electronics may adjust the power of the laser so that energy density at the target, i.e. in the area of the laser spot, remains at a desired level for the measurement being made. The energy output of each of the light sources will be known, and by knowing the beam divergence, it will be possible to determine for each light source the size of the area that is irradiated at any particular distance, which will allow the energy density at the target to be determined. As mentioned above, the distance to the target can be determined by the position and/or size of the irradiated area(s) in the field of view of the camera, with the laser spot 21 being particularly preferred for determining distance. Accordingly, the control system is able to increase the power of the laser to compensate for the lower energy density that normally accompanies a greater distance to the target and hence a larger spot size for the light sources 22a, 22b, 22c. The control system can thus achieve the target energy density for the measurement being made at any distance within the working range.

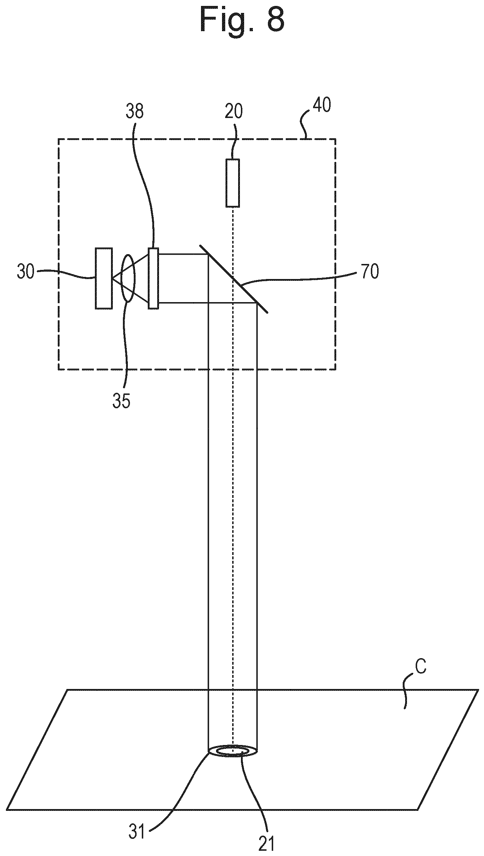

A further embodiment will now be described with reference to Figure 8. This embodiment shows, in particular, the use of a beam splitter for enabling a co-axial arrangement of the light source and optical sensor. For simplicity, Figure 8 shows only the support 40 and the elements carried on the support. This Figure omits the housing 10, actuator 50 that moves the support 40, and the controller 60, which may be substantially as described above.

This embodiment comprises a light source 20, again in the form of a laser. This laser is configured to emit collimated light having a wavelength of approximately 450 nm, with a beam diameter of 3 mm and should be capable of delivering saturation pulses lasting approximately one second to the target having an average photosynthetic photon flux density (PPFD) of 16000 µmol m⁻² s⁻¹. The laser should also be capable of delivering measurement pulses lasting between 1 µs and 1 ms. It will be noted that the laser in this embodiment is more powerful than in the preceding embodiment owing to the use of the beam splitter.

The higher powered laser is required because the laser irradiates a beam splitter 70, also carried on the support 40. In the Figure, the laser emits light along a vertical axis, with the beam being incident on the mirror at 45° angle. The beam splitter may be a half-silvered mirror, for example. The beam splitter should be configured so that, as close as possible, 50% of incident light is transmitted through the beam splitter and 50% of incident light is reflected. In the present arrangement, the light from the laser 20 that is transmitted through the beam splitter is used to irradiate a target area 21, and hence twice the irradiation power is required in order for the split beam to reach the required energy densities at the target. In this example, the light from the laser 20 that is reflected into the horizontal axis by the beam splitter is not used.

Also carried on the support 40 is an optical sensor arrangement comprising a non-imaging optical sensor 30, such as a photodiode, an optical filter 35, which may be a filter wheel substantially as described with respect to the first embodiment, and a condensing lens 38. These components are arranged on another side of the beam splitter, i.e. on the horizontal axis in the Figure and on the side of the beam splitter 70 to which none of the laser light is directed. The condensing lens 38 is preferably motorised so as to be movable in the direction towards and away from the optical sensor 30 in order to compensate for varying distance to the sample. This increases the working range of the detector and improves the resulting signal. A motorised condensing lens may be used in any of the embodiments described herein, e.g. either as part of a camera or, as in the present embodiment, spaced from a non-imaging detector. By this arrangement, chlorophyll fluorescence within a detectable area 31 is incident on the beam splitter 70 in the vertical axis, and the light that is reflected by the beam splitter into the horizontal axis is directed towards the optical sensor 30. The light reflected into this horizontal axis is incident first upon the condensing lens 38, which is arranged to focus the light reflected from the beam splitter 70 towards the optical sensor 30. As the light is focused from the condensing lens 38 towards the optical sensor 30, it passes through the optical filter 35, which may filter out all light outside of the range 650 nm to 750 nm for example. Thus, the intensity of the light received at the optical sensor 30 will be indicative of the level of chlorophyll fluorescence at the target area 21. It should be noted that the condensing lens 38 in this embodiment is not essential and could be omitted, provided that the optical sensor 30 and the filter 35 are large enough to receive sufficient light from the area 31. Additionally, while a non-imaging sensor is used, it would also be possible to use an imaging sensor, such as a camera; however depth perception of the spot due to parallax would be lost.

As can be seen in Figure 8, mounting the laser 20 and the optical sensor arrangement on perpendicular axes with the intermediate beam splitter 70, allows for the irradiation direction and the sensing direction to be co-axial between the beam splitter 70 and the target 21, with the area 31 from which light is detectable by the sensor 30 being centred on the target 21, regardless of the distance to the target. With the laser 20, the sensor 30 along with the filter 35 and condensing lens 38, and the beam splitter 70 being fixedly mounted relative to one another on the support 40, movement of the support, e.g. by the actuator (not shown in this embodiment) can point the system at different targets to be imaged, and the light from the target area will be incident in the same manner on the sensor 30 regardless of the location of the target. Alternatively, the co-axial irradiation and sensor direction could be directed at different targets while leaving the support 40 fixed by, for example, steering optics, such as a scanning mirror arrangement, located in the co-axial optical paths.

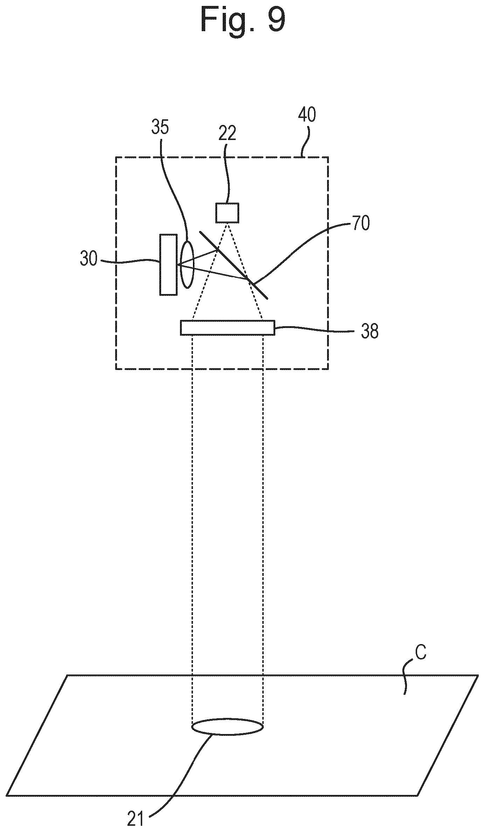

Figure 9 shows a variation of the embodiment shown in Figure 8. Whereas in Figure 8, the light from the laser is already collimated when incident upon the beam splitter 70, in this embodiment, the laser is replaced by a divergent light source 22 and the condensing lens 38, i.e. for collimating this light, is located downstream of the beam splitter 70, in the path of the light transmitted through the beam splitter. This lens 38 is thus also used to focus the chlorophyll fluorescent light from the target area 21 onto beam splitter 37 where approximately half of the light is reflected onto the optical sensor 30 through the filter 35. By positioning the light source at the transmitted focal point of the lens 38 and the optical sensor at the reflected focal point of the lens 38, this lens serves the dual purpose of collimating the light from the light source and focusing the light from the target onto the optical sensor.

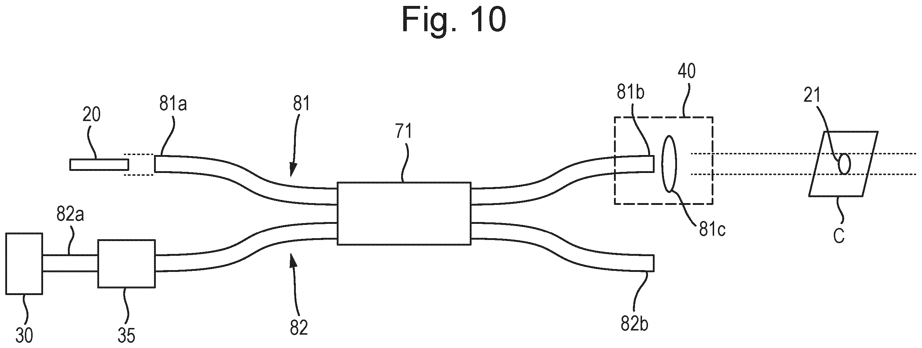

Figure 10 shows another embodiment of a system, which in this case uses optical fibers 81, 82 and an optical fiber coupler 71 to achieve on-axis illumination and detection.

This embodiment comprises a laser light source 20, which again should be configured to emit collimated light having a wavelength of approximately 450 nm, with a beam diameter of 3 mm and should be capable of delivering saturation pulses lasting approximately one second to the target having an average photosynthetic photon flux density (PPFD) of at least 16000 µmol m⁻² s⁻¹. A greater power may be required depending on the losses from the optical fibers. This laser injects light into a first end 81a of an optical fiber 81. This optical fiber conveys the light to an optical fiber coupler 71, which splits this input light so that, as near as possible, 50% continues towards the second end 81b of the first fiber 81 and 50% is directed into a second optical fiber 82, whereupon it travels towards a second end 82b of the second optical fiber 82. The light directed towards the second end 82b of the second optical fiber 82 is not used further in this embodiment.

The second end of the first optical fiber is mounted on a movable platform 40. The second end of the fiber is coupled to a fiber collimator 81c, which ensures that the light emitted from the fiber is converted into a substantially collimated light beam that may be directed at a target 21. This fiber collimator 81c may be a separate component attached to the end of the fiber, or may be integrated into the second end 81b of the first optical fiber 81. Preferably, the optical fibers 81, 82 have diameters on the order of 100 nm, so as to have a low numerical aperture. A relatively narrow optical fiber and low numerical aperture ensures tight collimation of the output light can be more readily achieved. The movable platform may be moved by an actuator and thus move the end of the optical fiber and the collimator in order to controllably direct the light at different target areas.

Chlorophyll fluorescence from the target 21 will be incident upon the fiber collimator 81c, which will act to couple this light into the second end 81b of the optical fiber, whereupon it will be transmitted to the optical fiber coupler 71. The optical fiber coupler thus splits the chlorophyll fluorescence so that, as near as possible, 50% continues towards the first end 81a of the first fiber 81 and 50% is directed into the second optical fiber 82, whereupon it travels towards a first end 82a of the second optical fiber 82.

The chlorophyll fluorescence travelling towards the first end 82a of the second optical fiber is passed through a fiber Bragg grating or thin film filter 35, which should be configured to transmit only light in the range 650 nm to 750 nm, to filter out light from the laser. Finally, the filtered light is received at a coupled optical sensor 30, which detects the intensity of the chlorophyll fluorescence.

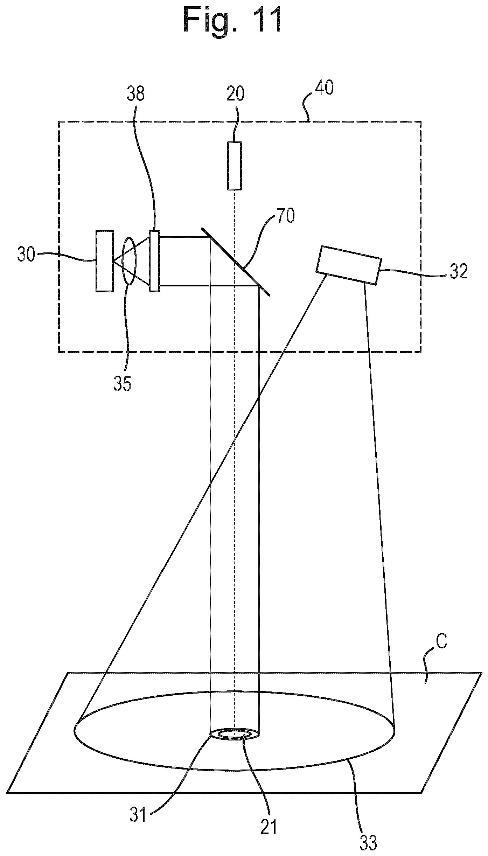

Figure 11 shows a further variation of the embodiment shown in Figure 8. In addition to the non-imaging optical sensor 30, this embodiment includes an imaging optical sensor 32, i.e. a camera. Whereas the non-imaging optical sensor 30 is arranged with a light splitter 70 so as to define a co-axial irradiation and sensor direction, the camera 32 is arranged with a different angle of regard to the irradiation direction. The camera 32 of this embodiment has a wider field of view than the non-imaging optical sensor 30 and defines a field of view 33 that encompasses the field of view 31 of the non-imaging optical sensor 30. For example, the non-imaging optical sensor 30 may receive light from an area of no more than 200 deg², whereas the camera 32 may receive light from an area of at least 2000 deg². In this embodiment, the camera 32 is also mounted on the support 40 and is moved together with the laser 20 and the non-imaging optical sensor 30. However, since the camera may have a wide field of view, it would also be possible for the camera to be fixedly mounted so that the light source and optical sensor move relative to the camera by the actuator. The camera in this embodiment may be used for a number of functions. Firstly, the camera may determine the distance to the target using the same parallax technique described above. Secondly, the camera may be used to direct the laser, e.g. to ensure it irradiates a crop rather than background, and to construct an image of the canopy, e.g. to provide information as to the nature of the area from which the chlorophyll fluorescence is being measured. This embodiment may therefore provide the advantages of both an imaging and non-imaging sensor. It will be appreciated that any of the above embodiments could be modified to use a non-imaging sensor for the chlorophyll fluorescence measurements and to have a separate imaging sensor, such as a camera.

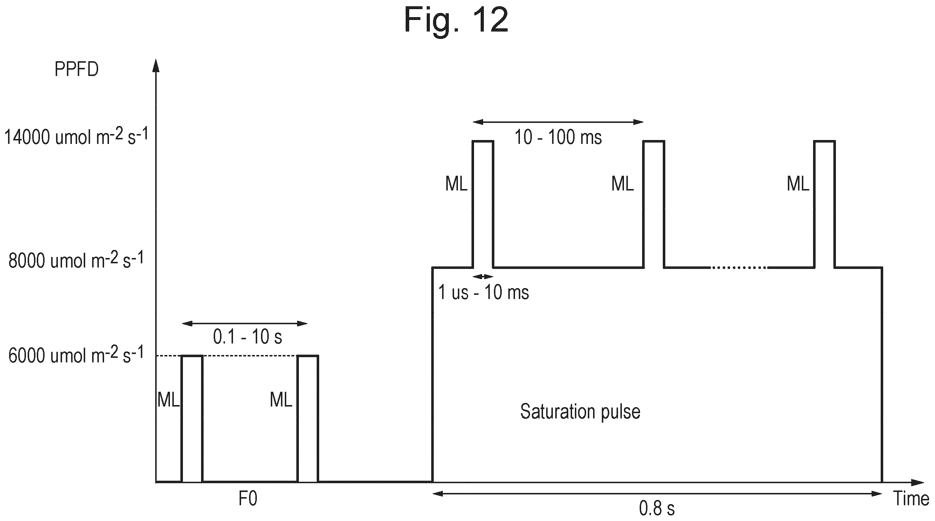

Figure 12 to 14 illustrate a number of different ways of operating the embodiments described above, particularly regarding the driving of the light source used to irradiate the crop to make chlorophyll fluorescence measurements.

Figure 12 is a graph showing a first measurement technique. The y-axis illustrates the PPFD, i.e. amplitude or intensity of the light irradiating the target area, in units of µmol m⁻² s⁻¹ and the x-axis illustrates time. As can be seen in the graph, in a first measurement phase, the target is irradiated with a series of measurement pulses (ML) in order to make a so-called F0 measurement. Each measurement pulse is formed by turning the light from an initial off state to an on state having a specified intensity for the F0 measurement. These measurement pulses may be repeated a series of times in the first measurement phase. Each measurement pulse has a PPFD of about 6000 µmol m⁻² s⁻¹ and a duration of about 1 µs to 10 ms. The period between each pulse may be between 0.1 s to 10 s. In a second measurement phase, the plant is irradiated with a saturation pulse. The saturation pulse lasts about 0.8 s. In the saturation pulse, the light is initially turned on to a first amplitude of around 8000 µmol m⁻² s⁻¹ and the light is pulsed to a higher amplitude of about 14000 µmol m⁻² s⁻¹. These pulses superimposed on the 8000 µmol m⁻² s⁻¹ pulse have a duration of about 1 µs to 10 ms and a period of about 10 ms to 100 ms. This corresponds to the measurement process described above.

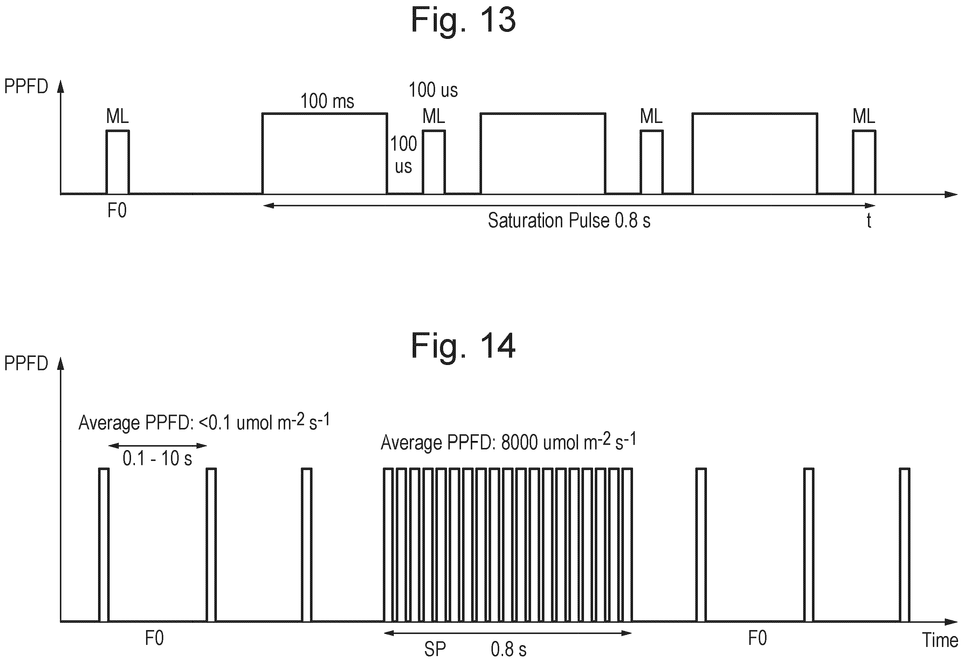

Figure 13 is a graph showing a second measurement technique. Again, the y-axis illustrates the PPFD and the x-axis illustrates time. This measurement process begins again with a first measurement phase for measuring F0, which may be the same as described above with respect to Figure 12, comprising one or more measurement pulses a PPFD of about 6000 µmol m⁻² s⁻¹ and a duration of about 1 µs to 10 ms. The period between each pulse may be between 0.1 s to 10 s. However, this method differs in the saturation pulse, which in this case is broken up into a series of discrete different pulses. In particular, the saturation pulse is replaced with a series of first pulses, each of which has a duration of in the range 0.1 ms to 100 ms and an amplitude of about 2000 to 8000 µmol m⁻² s⁻¹, and a series of second pulses, each of which has a duration in the range 0.01 µs to 100 µs, typically about 10 µs, and an amplitude in the range 8000 to 24000 µmol m⁻² s⁻¹. The amplitude, duration, and time between these pulses is set such that the average PPFD in the second measurement phase is 8000 µmol m⁻² s⁻¹. The first and second pulses alternate within the second measurement phase, which lasts about 0.8 s. The second pulse is a measurement pulse (ML), which occurs about 100 µs after the first pulse has finished. In this embodiment, the first pulse causes saturation of the reaction centres of the plant at the target area, and then the second pulse allows for the so-called Fm measurement.

Figure 14 is a graph showing a third measurement technique. Again, the y-axis illustrates the PPFD and the x-axis illustrates time. This measurement process begins again with a first measurement phase for measuring F0. The pulse intensity and timing is selected so that an average PPFD delivered to the target is less than 0.1 µmol m⁻² s⁻¹ in this first measurement phase. As shown in Figure 14, this may be achieved with measurement pulses having a first frequency, although in some cases there may be only one measurement pulse in the first measurement phase. The second measurement phase is made up of a series of pulses that have the same intensity and duration as the pulses in the first measurement phase. However, now the frequency of the pulses is increased relative to the first measurement phase so that the average PPFD delivered to the target is about 8000 µmol m⁻² s⁻¹. The pulses in the first and second measurement phases are set to have the same intensity and duration, and differ only in frequency, which simplifies production and control of the system.

The invention may be further understood by reference to the following numbered clauses:
Clause 1. A system for measuring chlorophyll fluorescence, the system comprising: at least one light source configured to emit substantially collimated or convergently focussed light so as to irradiate an area with light; an actuator configured to controllably direct the light from the light source so as to enable the light source to irradiate a plurality of different areas with light; and an optical sensor configured to detect chlorophyll fluorescence from each area irradiated with light.
Clause 2. A system according to clause 1, wherein the actuator is configured to move the light source so as to direct the light from the light source, and/or wherein the actuator is configured to move one or more optical elements, such as mirrors, relative to the light source so as to direct the light from the light source.
Clause 3. A system according to clause 1 or clause 2, comprising an actuator configured to move the optical sensor and/or to move one or more optical elements, such as mirrors, relative to the optical sensor so as to enable the optical sensor to detect chlorophyll fluorescence from each area irradiated with light.
Clause 4. A system according to clause 3, wherein the actuator configured to move the optical sensor and/or to move one or more optical elements relative to the optical sensor is the same actuator configured to direct the light from the light source.
Clause 5. A system according to clause 3 or clause 4, wherein the optical sensor has a field of view that is smaller than the total space accessible for irradiation by the at least one light source, preferably less than 10%, more preferably less than 5%, further preferably less than 1%, most preferably less than 0.5% of the total space accessible for irradiation by the light source.
Clause 6. A system according to any of clauses 3 to 5, wherein the optical sensor has a field of view of no more than 400 deg², preferably no more than 200 deg², more preferably no more than 50 deg², most preferably no more than 25 deg².
Clause 7. A system according to any of the preceding clauses, wherein the at least one light source and optical sensor are fixedly mounted relative to one another.
Clause 8. A system according to any of the preceding clauses, wherein the optical sensor comprises an imaging sensor, such as a camera.
Clause 9. A system according to clause 8, further comprising a controller configured to distinguish between a target area containing the area irradiated with light from the at least one light source and at least one background area in a measurement image, the controller further being configured to adjust the detected intensity in the target area based on the detected intensity in the background area.
Clause 10. A system according to clause 9, wherein the background area comprises substantially the entire of the measurement image outside of the target area.
Clause 11. A system according to clause 9, wherein the controller is configured to select a part of the measurement image outside of the target area as the background area, preferably based on the detected intensities across the measurement image.
Clause 12. A system according to any of clauses 9 to 11, wherein the controller is configured to adjust the detected intensity in the target area based on the detected intensity in the background area by calculating an average background intensity across the background area and subtracting the average background intensity from the detected intensity in the target area.
Clause 13. A system according to any of clauses 8 to 13, wherein the at least one light source comprises a laser, and further comprising a controller configured to identify a target area in a measurement image of the imaging sensor, the target area being a portion of the area irradiated by the laser, wherein preferably the laser is configured to irradiate a spot-shaped area with light and the target area is a central portion of the irradiated spot-shaped area.
Clause 14. A system according to any of clauses 1 to 7, wherein the optical sensor is a non-imaging optical sensor, and further comprising an imaging optical sensor configured to take images of the areas being irradiated with light, wherein preferably the imaging optical sensor has a wider field of view than the non-imaging optical sensor.
Clause 15. A system according to any of the preceding clauses, further comprising an optical filter arranged to block reflected light from the at least one light source and allow the optical sensor to detect light resulting from chlorophyll fluorescence.
Clause 16. A system according to clause 15, wherein the optical filter comprises a long-pass filter, preferably configured to block light having a wavelength of approximately 650 nm or less, or a band-pass filter, preferably configured to block light outside of the range 650 nm to 750 nm, preferably outside of the range 650 nm to 700 nm or 700 nm to 750 nm.
Clause 17. A system according to clause 15 or clause 16, wherein the optical filter is an interference filter.
Clause 18. A system according to any of clauses 15 to 17, wherein the optical filter is movable relative to the optical path of light impinging on the optical sensor in order to selectively block reflected light from the at least one light source, wherein preferably the optical filter is located on a filter wheel, preferably comprising multiple different filters.
Clause 19. A system according to any of the preceding clauses, further comprising a controller configured to determine a target distance based on the position, the size and/or the shape of the irradiated area within the field of view of the optical sensor.
Clause 20. A system according to any of the preceding clauses, wherein the actuator has two degrees of freedom so as to enable the at least one light source to irradiate different areas across two dimensions with light.
Clause 21. A system according to clause 20, wherein the actuator has variable yaw and pitch so as to enable the at least one light source to irradiate different areas across two dimensions with light.
Clause 22. A system according to any of the preceding clauses, wherein the at least one light source and optical sensor are mounted within an enclosed housing comprising a transparent window through which the at least one light source and optical sensor may operate.
Clause 23. A system according to any of the preceding clauses, wherein the at least one light source comprises a laser, preferably an adjustable power laser.
Clause 24. A system according to clause 23, wherein the laser is configured to irradiate a spot-shaped area with light.
Clause 25. A system according to any of the preceding clauses, wherein the at least one light source comprises one or more LEDs.
Clause 26. A system according to any of the preceding clauses, wherein the at least one light source comprises a diverging light source and focusing optics for substantially collimating or convergently focussing the light emitted from the diverging light source.
Clause 27. A system according to any of the preceding clauses, comprising a plurality of light sources, each configured to emit substantially collimated or convergently focussed light and arranged so as to irradiate a common area with light.
Clause 28. A system according to clause 27 wherein a first of the plurality of light sources comprises a laser, preferably an adjustable power laser, and wherein a second of the plurality of light sources comprises a diverging light source and focusing optics for substantially collimating or convergently focussing the light emitted from the diverging light source.
Clause 29. A system according to clause 28, wherein a third of the plurality of light sources comprises a diverging light source and focusing optics for substantially collimating or convergently focussing the light emitted from the diverging light source.
Clause 30. A system according to clause 28 or clause 29, wherein the laser is an adjustable power laser and further comprising a controller configured to adjust the power of the laser based on a target distance and/or based on the power of the second light source and/or the beam divergence of the second light source.
Clause 31. A system according to any of clauses 27 to 30, wherein the plurality of light sources are arranged in a ring array around the optical sensor.
Clause 32. A system according to any of the preceding clauses, comprising a plurality of light sources, wherein at least two of the plurality of light sources emit light having a wavelength or range of wavelengths different from each other.
Clause 33. A system according to any of the preceding clauses, wherein the or each light source is configured to irradiate an area of less than 50 cm², preferably less than 25 cm², more preferably less than 5 cm², even more preferably less than 1 cm², most preferably less than 5 mm², at least at one working distance in the range 0.1 m to 20 m, preferably in the range 0.1 m to 10 m, more preferably in the range 0.1 m to 5 m, most preferably in the range 0.5 m to 1 m.
Clause 34. A system according to any of the preceding clauses, wherein the light source is configured to emit substantially collimated light having a beam divergence of 10° or less, preferably 5° or less, more preferably 2° or less, even more preferably 1° or less, most preferably 0.1° or less.
Clause 35. A system according to any of the preceding clauses, further comprising a controller configured to: a) irradiate a first area with light using the at least one light source; b) detect chlorophyll fluorescence from the first area using the optical sensor; c) redirect the light from the at least one light source using the actuator; d) irradiate a second area with light using the at least one light source; and e) detect chlorophyll fluorescence from the second area using the optical sensor.
Clause 36. A system according to clause 35, wherein the controller is configured to successively irradiate different areas with light using the light source and detect chlorophyll fluorescence from said areas across a two-dimensional array of measurement positions.
Clause 37. A system according to any of the preceding clauses, comprising a controller configured to irradiate each area with a plurality of pulses of light of different intensities and/or durations.
Clause 38. A system according to any of the preceding clauses, further comprising a beam splitter or optical coupler, wherein the light source is arranged so as to irradiate said area along a first optical path through the beam splitter or optical coupler and wherein the optical sensor is arranged to receive chlorophyll fluorescence emitted from said area along a second optical path different from the first optical path through the beam splitter or optical coupler, wherein the light source and the optical sensor are arranged such that the optical paths are substantially co-axial between the beam splitter or optical coupler and said area.
Clause 39. A system according to clause 38 when dependent on any of clauses 15 to 18, wherein said optical filter is arranged between the beam splitter or optical coupler and the optical sensor.
Clause 40. A system according to clause 38 or clause 39, comprising the beam splitter and further comprising focusing optics between the beam splitter and said area to be irradiated, the focusing optics being configured to substantially collimate or convergently focus light from the light source and to collimate or convergently focus chlorophyll fluorescence from said area towards the optical sensor.
Clause 41. A system according to clause 38 or clause 39, comprising the optical coupler, wherein the light source is configured to emit light into a first end of a first optical fiber and the optical sensor is configured to receive light from a first end of a second optical fiber, said first and second optical fibers being coupled together by the optical coupler so that a second end of either the first or second optical fiber emits light from the light source to irradiate said area and said second end receives chlorophyll fluorescence from said area, wherein preferably the actuator is configured to controllably direct the light from the light source by moving said second end of either the first or second optical fiber.
Clause 42. A system according to any of clauses 38 to 41, wherein the optical sensor is a non-imaging optical sensor.
Clause 43. A system according to any of the preceding clauses, further comprising a controller configured to control the at least one light source to irradiate each area with light such that, in a first measurement phase, the light is modulated in intensity to define one or more pulses of light with a low average intensity, and in a second measurement phase, the light is modulated in intensity to define a plurality of discrete different pulse types, together having a high average intensity.
Clause 44. A system according to clause 43, wherein the controller controls the at least one light source such that the intensity of irradiated light at each area returns to substantially zero between each pulse type.
Clause 45. A system according to any of clauses 1 to 42, further comprising a controller configured to control the at least one light source to irradiate each area with light such that, in a first measurement phase, the light is modulated in intensity to define one or more discrete pulses of light making up a first proportion of the first measurement phase and having a low average intensity, and such that in a second measurement phase, the light is modulated in intensity to define a plurality of discrete pulses making up a second proportion of the second measurement phase greater than the first proportion of the first measurement phase and having a high average intensity.
Clause 46. A system according to clause 45, wherein the pulses in the first measurement phase have a first frequency and the pulses in the second measurement phase have a second frequency higher than the first frequency, wherein preferably the pulses in the first and second measurement phases have the same intensity and duration.
Clause 47. A method of measuring chlorophyll fluorescence, the method comprising: a) irradiating a first area with light using at least one light source configured to emit substantially collimated or convergently focussed light; b) detecting chlorophyll fluorescence from the first area using an optical sensor; c) redirecting the light from the at least one light source using an actuator; d) irradiating a second area with light using the at least one light source; and e) detecting chlorophyll fluorescence from the second area using the optical sensor.
Clause 48. A method according to clause 47, wherein irradiating the first and second areas with light comprises irradiating each of said areas with a plurality of pulses of light of different intensities and/or durations.
Clause 49. A method according to clause 47 or clause 48, further comprising moving the optical sensor and/or moving one or more optical elements relative to the optical sensor using an actuator so as to enable the optical sensor to detect chlorophyll fluorescence from each area irradiated with light.
Clause 50. A method according to clause 49, wherein the actuator used to move the optical sensor and/or to move the one or more optical elements relative to the optical sensor is the same actuator used to redirect the light from the at least one light source.
Clause 51. A method according to clause 49 or clause 50, wherein the optical sensor has a field of view that is smaller than the total space accessible for irradiation by the at least one light source, preferably less than 10%, more preferably less than 5%, further preferably less than 1%, most preferably less than 0.5% of the total space accessible for irradiation by the light source.
Clause 52. A method according to any of clauses 49 to 51, wherein the optical sensor has a field of view of no more than 400 deg², preferably no more than 200 deg², more preferably no more than 50 deg², most preferably no more than 25 deg².
Clause 53. A method according to any of clauses 47 to 52, wherein the at least one light source and optical sensor are fixedly mounted relative to one another.
Clause 54. A method according to any of clauses 47 to 53, wherein the optical sensor comprises an imaging sensor, such as a camera.
Clause 55. A method according to clause 54, wherein detecting chlorophyll fluorescence comprises identifying in a measurement image from the imaging sensor a target area containing an area irradiated with light from the at least one light source and at least one background area, and adjusting the detected intensity in the target area based on the detected intensity in the background area.
Clause 56. A method according to clause 55, wherein the background area comprises substantially the entire of the measurement image outside of the target area.
Clause 57. A method according to clause 55, wherein identifying the at least one background area comprises selecting a part of the measurement image outside of the target area, preferably based on the detected intensities across the measurement image.
Clause 58. A method according to any of clauses 55 to 57, wherein adjusting the detected intensity in the target area based on the detected intensity in the background area comprises calculating an average background intensity across the background area and subtracting the average background intensity from the detected intensity in the target area.
Clause 59. A method according to any of clauses 54 to 58, wherein the at least one light source comprises a laser, and further comprising identifying a target area in a measurement image of the imaging sensor, the target area being a portion of the area irradiated by the laser, wherein preferably the laser is configured to irradiate a spot-shaped area with light and the target area is a central portion of the irradiated spot-shaped area.
Clause 60. A method according to any of clauses 47 to 53, wherein the optical sensor is a non-imaging optical sensor, and further comprising taking an image of the areas irradiated with light with an imaging optical sensor, wherein preferably the imaging optical sensor has a wider field of view than the non-imaging optical sensor
Clause 61. A method according to any of clauses 47 to 54, wherein the steps of detecting chlorophyll fluorescence are performed while an optical filter is located in the optical path of light between the target area and the optical sensor in order to block reflected light from the at least one light source.
Clause 62. A method according to clause 61, wherein the optical filter comprises a long-pass filter, preferably configured to block light having a wavelength of approximately 650 nm or less, or a band-pass filter, preferably configured to block light outside of the range 650 nm to 750 nm.
Clause 63. A method according to clause 61 or clause 62, wherein the optical filter is an interference filter.
Clause 64. A method according to any of clauses 61 to 63, comprising selectively moving the optical filter relative to the optical path, preferably by moving the optical filter on a filter wheel.
Clause 65. A method according to any of clauses 47 to 64, comprising determining a distance to the irradiated first area and/or the irradiated second area based on the position, the size and/or the shape of said irradiated area within the field of view of the optical sensor.
Clause 66. A method according to any of clauses 47 to 65, wherein the actuator has two degrees of freedom so as to enable the at least one light source to irradiate different areas across two dimensions with light.
Clause 67. A method according to clause 66, wherein the actuator has variable yaw and pitch so as to enable the at least one light source to irradiate different areas across two dimensions with light.
Clause 68. A method according to any of clauses 47 to 67, wherein the at least one light source and optical sensor are mounted within an enclosed housing comprising a transparent window through which the at least one light source and optical sensor may operate.
Clause 69. A method according to any of clauses 47 to 68, wherein the at least one light source comprises a laser, preferably an adjustable power laser.
Clause 70. A method according to clause 69, wherein the laser is configured to irradiate a spot-shaped area with light.
Clause 71. A method according to any of clauses 47 to 69, wherein the at least one light source comprises one or more LEDs.
Clause 72. A method according to any of clauses 47 to 71, wherein the at least one light source comprises a diverging light source and focusing optics for substantially collimating or convergently focussing the light emitted from the diverging light source.
Clause 73. A method according to any of clauses 47 to 72, wherein each area is illuminated with light from a plurality of light sources, each light source emitting substantially collimated or convergently focussed light so as to irradiate a common area with light.
Clause 74. A method according to clause 73, wherein a first of the plurality of light sources comprises a laser, preferably an adjustable power laser, and wherein a second of the plurality of light sources comprises a diverging light source and focusing optics for substantially collimating or convergently focussing the light emitted from the diverging light source.
Clause 75. A method according to clause 74, wherein a third of the plurality of light sources comprises a diverging light source and focusing optics for substantially collimating or convergently focussing the light emitted from the diverging light source.
Clause 76. A method according to any of clauses 74 to 75, wherein the laser is an adjustable power laser and further comprising adjusting the power of the laser when irradiating each area based on a distance to the irradiated first or second area and/or based on the power of the second light source and/or the beam divergence of the second light source.
Clause 77. A method according to any of clauses 73 to 76, wherein the plurality of light sources are arranged in a ring array around the optical sensor.
Clause 78. A method according to any of clauses 73 to 77, wherein at least two of the plurality of light sources emit light having a wavelength or range of wavelengths different from each other.
Clause 79. A method according to any of clauses 47 to 78, wherein the or each light source is used to irradiate an area of less than 50 cm², preferably less than 25 cm², more preferably less than 5 cm², even more preferably less than 1 cm², most preferably less than 5 mm², at least at one distance in the range 0.1 m to 20 m, preferably in the range 0.1 m to 10 m, more preferably in the range 0.1 m to 5 m, most preferably in the range 0.5 m to 1 m.
Clause 80. A method according to any of clauses 47 to 79, wherein the light source is configured to emit substantially collimated light having a beam divergence of 10° or less, preferably 5° or less, more preferably 2° or less, even more preferably 1° or less, most preferably 0.1° or less.
Clause 81. A method according to any of clauses 47 to 80, comprising successively irradiating different areas with light using the at least one light source and detecting chlorophyll fluorescence from said areas across a two dimensional array of measurement positions.
Clause 82. A method according to any of clauses 47 to 81, further comprising a beam splitter or optical coupler, wherein the light source is arranged so as to irradiate said first or second area along a first optical path through the beam splitter or optical coupler and wherein the optical sensor is arranged to receive chlorophyll fluorescence emitted from said first or second area along a second optical path different from the first optical path through the beam splitter or optical coupler, wherein the light source and the optical sensor are arranged such that the optical paths are substantially co-axial between the beam splitter or optical coupler and said first or second area.
Clause 83. A method according to clause 82 when dependent on any of clauses 61 to 64, wherein said optical filter is arranged between the beam splitter or optical coupler and the optical sensor.
Clause 84. A method according to clause 82 or clause 83, comprising the beam splitter and further comprising focusing optics between the beam splitter and the area to be irradiated, the focusing optics being configured to substantially collimate or convergently focus light from the light source and to collimate or convergently focus chlorophyll fluorescence from said area towards the optical sensor.
Clause 85. A method according to clause 82 or clause 83, comprising the optical coupler, wherein the light source is used to emit light into a first end of a first optical fiber and the optical sensor is used to receive light from a first end of a second optical fiber, said first and second optical fibers being coupled together by the optical coupler so that a second end of either the first or second optical fiber emits light from the light source to irradiate said first or second area and said second end receives chlorophyll fluorescence from said area, wherein preferably the actuator is configured to re-direct the light from the light source by moving said second end of either the first or second optical fiber.
Clause 86. A method according to any of clauses 82 to 85, wherein the optical sensor is a non-imaging optical sensor.
Clause 87. A method according to any of clauses 47 to 86, comprising repeating steps c), d) and e) for one or more further areas and monitoring changes in the detected chlorophyll fluorescence over time.
Clause 88. A method according to any of clauses 47 to 87, further comprising recommending changes to one or more of lighting, temperature, water, humidity, CO₂ or O₂ concentration, soil nutrient concentration and soil pH based on the detected chlorophyll fluorescence or a change in the detected chlorophyll fluorescence over time.
Clause 89. A method according to any of clauses 47 to 88, comprising irradiating each area with light such that, in a first measurement phase, the light is modulated in intensity to define one or more pulses of light with a low average intensity, and in a second measurement phase, the light is modulated in intensity to define a plurality of discrete different pulse types, together having a high average intensity.
Clause 90. A method according to clause 89, wherein the intensity of irradiated light at each area returns to substantially zero between each pulse type.
Clause 91. A method according to any of clauses 47 to 88, comprising irradiating each area with light such that, in a first measurement phase, the light is modulated in intensity to define one or more discrete pulses of light making up a first proportion of the first measurement phase and having a low average intensity, and such that in a second measurement phase, the light is modulated in intensity to define a plurality of discrete pulses making up a second proportion of the second measurement phase greater than the first proportion of the first measurement phase and having a high average intensity.
Clause 92. A method according to clause 91, wherein the pulses in the first measurement phase have a first frequency and the pulses in the second measurement phase have a second frequency higher than the first frequency, wherein preferably the pulses in the first and second measurement phases have the same intensity and duration.

## Claims

1. A system for measuring chlorophyll fluorescence, the system comprising:
at least one light source configured to emit substantially collimated or convergently focussed light so as to irradiate an area with light;
an actuator configured to controllably direct the light from the light source so as to enable the light source to irradiate a plurality of different areas with light; and
an optical sensor configured to detect chlorophyll fluorescence from each area irradiated with light, wherein the optical sensor comprises an imaging sensor.

2. A system according to claim 11, further comprising a controller configured to distinguish between a target area containing the area irradiated with light from the at least one light source and at least one background area in a measurement image, the controller further being configured to adjust the detected intensity in the target area based on the detected intensity in the background area.

3. 2A system according to claim 2, wherein the controller is configured to select a part of the measurement image outside of the target area as the background area, preferably based on the detected intensities across the measurement image.

4. A system according to claim 3, wherein the controller is configured to select as the background area an area of the same plant or same leaf as the target area.

5. A system according to any of claims 22 to 34, wherein the controller is configured to adjust the detected intensity in the target area based on the detected intensity in the background area by calculating an average background intensity across the background area and subtracting the average background intensity from the detected intensity in the target area.

6. A system according to any of the preceding claims, wherein the at least one light source comprises a laser, and further comprising a controller configured to identify a target area in a measurement image of the imaging sensor, the target area being a portion of the area irradiated by the laser, wherein preferably the laser is configured to irradiate a spot-shaped area with light and the target area is a central portion of the irradiated spot-shaped area.

7. A system according to any of the preceding claims, further comprising a controller configured to determine a target distance based on the position, the size and/or the shape of the irradiated area within the field of view of the optical sensor.

8. A system according to claim 7, wherein the controller is configured to adjust the detected chlorophyll fluorescence based on the determined target distance, and/or wherein the controller is configured to adjust a power of the light source based on the position, the size, and/or the shape of the irradiated area within the field of view of the optical sensor.

9. A system according to any of the preceding claims, wherein the at least one light source comprises a laser configured to irradiate a spot-shaped area with light, and further comprising a controller configured to determine an angle of the irradiated area with respect to a direction of a beam of the laser based on the shape of the spot within the field of view of the optical sensor.

10. A system according to any of the preceding claims, wherein the at least one light source comprises a laser, preferably an adjustable power laser and/or wherein preferably the laser is configured to irradiate a spot-shaped area with light.

11. A system according to any of the preceding claims, wherein the actuator has variable yaw and pitch so as to enable the at least one light source to irradiate different areas across two dimensions with light.

12. A system according to any of the preceding claims, further comprising a controller configured to control the at least one light source to irradiate each area with light such that, in a first measurement phase, the light is modulated in intensity to define one or more pulses of light with a low average intensity, and in a second measurement phase, the light is modulated in intensity to define a plurality of discrete different pulse types, together having a high average intensity, wherein the controller controls the at least one light source such that the intensity of irradiated light at each area returns to substantially zero between each pulse type, and wherein preferably the plurality of discrete different pulse types including a plurality of light pulses of a first pulse type and a plurality of light pulses of a second pulse type, wherein the light pulses of the second pulse type occur between the light pulses of the first pulse type.

13. An installation for a commercial greenhouse or vertical farm, the installation comprising a plurality of systems, each according to any of claims 1 to 12, the plurality of systems for measuring chlorophyll fluorescence of plants in different areas.

14. An installation according to claim 13, wherein each system is according to claim 11, wherein each system is mounted in a fixed position.

15. A method of measuring chlorophyll fluorescence, the method comprising:
a) irradiating a first area with light using at least one light source configured to emit substantially collimated or convergently focussed light;
b) detecting chlorophyll fluorescence from the first area using an optical sensor, wherein the optical sensor comprises an imaging sensor;
c) redirecting the light from the at least one light source using an actuator;
d) irradiating a second area with light using the at least one light source; and
e) detecting chlorophyll fluorescence from the second area using the optical sensor.
